# EUROPEAN PATENT APPLICATION

(11) **EP 4 832 612 A1**
(43) Date of publication of application: **28.10.2026**
(21) Application number: 24921808.2
(22) Date of filing: 26.12.2024
(51) Int. Cl.: H04W 72/0446

(54) **COMMUNICATION METHOD AND APPARATUS**

(30) Priority: 01.02.2024 CN 202410159089
(71) Applicant: Huawei Technologies Co., Ltd., Shenzhen, Guangdong 518129 (CN)
(72) Inventor: LUO, Zhihu, Shenzhen, Guangdong 518129 (CN)
(74) Representative: Huawei European IPR
(86) International application number: PCT/CN2024/142745
(87) International publication number: WO 2025/161786

(57) **Abstract**

This application provides a communication method and apparatus, to resolve a problem that a PUCCH of a narrowband terminal device affects a peak rate of PUSCH transmission of a broadband terminal device. In the method, an uplink signal sent without intra-slot frequency hopping is divided into two parts in time domain. Frequency domain resources corresponding to the two parts are consecutive, but determining manners of base sequences corresponding to the two parts are different. This manner can help implement code division multiplexing between an uplink signal transmitted without frequency hopping and an uplink signal transmitted with frequency hopping, thereby reducing a resource fragmentation problem caused by introduction of the narrowband terminal device, and improving resource utilization of a communication system.

## Description

### CROSS-REFERENCE TO RELATED APPLICATIONS

This application claims priority to Chinese Patent Application No. 202410159089.X, filed with the China National Intellectual Property Administration on February 1, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With the development of communication, the International Telecommunication Union (International Telecommunication Union, ITU) has defined a standard for massive machine-type communications (massive machine-type communications, mMTC). Currently, in the standard, user equipment (user equipment, UE) that performs mMTC services is referred to as reduced capability (reduced capability, REDCAP) UE, that is, low-complexity or low-capability UE. A maximum bandwidth of this type of UE may be less than a maximum bandwidth of legacy (legacy) UE in new radio (new radio, NR).

According to the standard definition, a maximum bandwidth of a bandwidth part (bandwidth part, BWP) cannot exceed a maximum bandwidth supported by a terminal device; otherwise, it is considered, by default, that the terminal device cannot access a network. Because a bandwidth capability of the REDCAP UE is low, a bandwidth of a BWP configured by a network device for the REDCAP UE is small. Therefore, a physical uplink control channel (physical uplink control channel, PUCCH) of the REDCAP UE performs frequency hopping within a small frequency range, which may interrupt contiguous resources that could otherwise be used for physical uplink shared channel (physical uplink shared channel, PUSCH) transmission of the legacy UE, thereby resulting in resource fragmentation, and affecting a peak rate of the PUSCH transmission of the legacy UE.

### SUMMARY

This application provides a communication method and apparatus, to resolve a problem that a PUCCH of a narrowband terminal device affects a peak rate of PUSCH transmission of a broadband terminal device.

According to a first aspect, a communication method is provided. The method may be performed by a terminal device or a chip, a chip system, or a circuit used in the terminal device. The method may be implemented by using the following steps: generating a first uplink signal based on a first base sequence and a second base sequence, and sending the first uplink signal without frequency hopping in a first time unit. A determining manner of the first base sequence is different from a determining manner of the second base sequence. The first uplink signal occupies K symbols in the first time unit, the K symbols include N symbols and M symbols, the N symbols correspond to the first base sequence, the M symbols correspond to the second base sequence, K=M+N, and N and M are integers greater than 0.

In this application, when the first uplink signal is sent without intra-slot frequency hopping, the first base sequence and the second base sequence are separately determined in different manners, so that code division multiplexing can be implemented between the first uplink signal and another uplink signal (for example, a second uplink signal) sent via intra-slot frequency hopping. In this way, resource utilization can be improved, thereby reducing occupation of PUSCH transmission resources of a second-type terminal device, and reducing impact on a peak rate of a PUSCH.

In a possible design, the determining manner of the first base sequence is the same as a determining manner of a base sequence used for a first hop of a second uplink signal, and the determining manner of the second base sequence is the same as a determining manner of a base sequence used for a second hop of the second uplink signal. The second uplink signal is transmitted via intra-slot frequency hopping. In this manner, code division multiplexing can be implemented between the first uplink signal sent without intra-slot frequency hopping and the second uplink signal sent with intra-slot frequency hopping. That is, a same time-frequency resource may be used to transmit different uplink signals, thereby reducing a resource fragmentation problem caused by introduction of the first uplink signal, and improving resource utilization of a communication system.

In a possible design, the method further includes: receiving indication information, where the indication information indicates to generate the first uplink signal based on the first base sequence and the second base sequence.

In a possible design, the method further includes: determining, based on a type of the terminal device, to generate the first uplink signal based on the first base sequence and the second base sequence.

In a possible design, the method further includes: determining, based on a number K of symbols to which the first uplink signal is mapped, to generate the first uplink signal based on the first base sequence and the second base sequence.

In a possible design, the method further includes: determining, based on a number of bits of a hybrid automatic repeat request acknowledgement (hybrid automatic repeat request acknowledgement, HARQ-ACK) carried in the first uplink signal, to generate the first uplink signal based on the first base sequence and the second base sequence.

In the foregoing several manners, a network device and the terminal device can align a manner of generating the first uplink signal, thereby helping improve transmission performance.

In a possible design, the method further includes: no dedicated resource configuration parameter of the first uplink signal is received before the first uplink signal is sent.

In a possible design, the method further includes: sending indication information, where the indication information indicates to generate the first uplink signal based on the first base sequence and the second base sequence. In this manner, a network device and the terminal device can align a manner of generating the first uplink signal, thereby improving transmission performance.

In a possible design, the method further includes: no dedicated resource configuration parameter of the first uplink signal is sent before the first uplink signal is received.

According to a second aspect, a communication method is provided. The method may be performed by a network device or a chip, a chip system, or a circuit used in the network device. The method may be implemented by using the following steps: receiving a first uplink signal without frequency hopping in a first time unit, where the first uplink signal corresponds to a first base sequence and a second base sequence, a determining manner of the first base sequence is different from a determining manner of the second base sequence, the first uplink signal occupies K symbols in the first time unit, the K symbols include N symbols and M symbols, the N symbols correspond to the first base sequence, the M symbols correspond to the second base sequence, K=M+N, and N and M are integers greater than 0.

In this application, when the first uplink signal is received without intra-slot frequency hopping, the determining manner of the first base sequence that corresponds to the first uplink signal is different from the determining manner of the second base sequence that corresponds to the first uplink signal, so that code division multiplexing can be implemented between the first uplink signal and another uplink signal (for example, a second uplink signal) sent via intra-slot frequency hopping. In this way, resource utilization can be improved, thereby reducing occupation of PUSCH transmission resources of a second-type terminal device, and reducing impact on a peak rate of a PUSCH.

In a possible design, the method further includes: receiving a second uplink signal with frequency hopping in the first time unit, where the second uplink signal corresponds to a third base sequence and a fourth base sequence, a determining manner of the third base sequence is different from a determining manner of the fourth base sequence, the second uplink signal occupies the K symbols, the N symbols correspond to the third base sequence, and the M symbols correspond to the fourth base sequence. In this manner, code division multiplexing can be implemented between the first uplink signal and the second uplink signal.

In a possible design, the determining manner of the first base sequence is the same as a determining manner of a base sequence used for a first hop of the second uplink signal, and the determining manner of the second base sequence is the same as a determining manner of a base sequence used for a second hop of the second uplink signal. The second uplink signal is transmitted via intra-slot frequency hopping. In this manner, code division multiplexing can be implemented between the first uplink signal sent without intra-slot frequency hopping and the second uplink signal sent with intra-slot frequency hopping, thereby reducing a resource fragmentation problem caused by introduction of the first uplink signal, and improving resource utilization of a communication system.

Based on the first aspect and the second aspect, the following designs are provided.

In a possible design, $N = \left⌊\frac{K}{2}\right⌋$ and/or $M = K - \left⌊\frac{K}{2}\right⌋$, and └ ┘ represents rounding down. In the foregoing manner, the first base sequence may be aligned, in time domain, with a first hop of another uplink signal sent with intra-slot frequency hopping, and the second base sequence may be aligned, in time domain, with a second hop of the another uplink signal sent with intra-slot frequency hopping, thereby helping implement code division multiplexing between the first uplink signal and the another uplink signal (for example, the second uplink signal) sent with intra-slot frequency hopping.

In a possible design, a value of *nₕₒₚ* corresponding to the first base sequence is different from a value of *nₕₒₚ* corresponding to the second base sequence. Values of *nₕₒₚ* of the first hop and the second hop of the another uplink signal sent with intra-slot frequency hopping are different. This manner helps implement code division multiplexing between the first uplink signal and the another uplink signal sent with intra-slot frequency hopping.

In a possible design, the value of *nₕₒₚ* corresponding to the first base sequence is 0, and the value of *nₕₒₚ* corresponding to the second base sequence is 1. The value of *nₕₒₚ* of the first hop of the another uplink signal sent with intra-slot frequency hopping is 0, and the value of *nₕₒₚ* of the second hop of the another uplink signal sent with intra-slot frequency hopping is 1. This manner helps implement code division multiplexing between the first uplink signal and the another uplink signal sent with intra-slot frequency hopping.

In a possible design, a sequence group number *u*1 corresponding to the first base sequence or a sequence group number *u*2 corresponding to the second base sequence is determined based on *f_{gh}.*

c() is a pseudo-random sequence.${n}_{s , f}^{μ}$ is a slot number in a radio frame.

*mod* is a modulo operation.

In the foregoing manner, the determining manner of the first base sequence is the same as a determining manner of a base sequence of the first hop of the another uplink signal sent with intra-slot frequency hopping, and the determining manner of the second base sequence is the same as a determining manner of a base sequence of the second hop of the another uplink signal sent with intra-slot frequency hopping, thereby implementing code division multiplexing between the first uplink signal and the another uplink signal sent with intra-slot frequency hopping.

In a possible design, the sequence group number *u*1 corresponding to the first base sequence or the sequence group number *u*2 corresponding to the second base sequence satisfies the following formula: $u 1 or u 2 = \left({f}_{gh}+{f}_{ss}\right) mod 30 .$

*fₛₛ* = *n_{ID} mod* 30, and *n_{ID}* is a cell identifier.

In the foregoing manner, the determining manner of the first base sequence is the same as a determining manner of the first hop of the another uplink signal sent with intra-slot frequency hopping, and the determining manner of the second base sequence is the same as a determining manner of the second hop of the another uplink signal sent with intra-slot frequency hopping, thereby implementing code division multiplexing between the first uplink signal and the another uplink signal (for example, the second uplink signal) sent with intra-slot frequency hopping.

In a possible design, a sequence number corresponding to the first base sequence or the second base sequence is *v* = 0.

In a possible design, a type of the terminal device is a first-type terminal device, and a maximum bandwidth capability of the first-type terminal device is less than a maximum bandwidth capability of a second-type terminal device; or a maximum bandwidth capability of the terminal device is less than or equal to a preset value. In the foregoing design, the first-type terminal device sends the first uplink signal without frequency hopping, and separately determines the first base sequence and the second base sequence in different manners, so that code division multiplexing can be implemented between the first uplink signal and another uplink signal (for example, an uplink signal of the second-type terminal device) sent with intra-slot frequency hopping, thereby reducing occupation of PUSCH transmission resources of the second-type terminal device, and reducing impact on a peak rate of a PUSCH.

In a possible design, the first uplink signal is a PUCCH, or the first uplink signal is uplink control information corresponding to the PUCCH, or the first uplink signal is a demodulation reference signal (demodulation reference signal, DMRS) corresponding to the PUCCH.

According to a third aspect, a communication method is provided. The method may be performed by a terminal device or a chip, a chip system, or a circuit used in the terminal device. The method may be implemented by using the following steps: generating a first uplink signal based on a first orthogonal sequence and a second orthogonal sequence, and sending the first uplink signal without frequency hopping in a first time unit. The first uplink signal occupies K symbols in the first time unit, the K symbols include N symbols and M symbols, the N symbols correspond to the first orthogonal sequence, the M symbols correspond to the second orthogonal sequence, K=M+N, and N and M are integers greater than 0.

In this application, when the first uplink signal is sent without intra-slot frequency hopping, the first uplink signal is generated based on at least two orthogonal sequences. Because another uplink signal sent via intra-slot frequency hopping is generated based on at least two orthogonal sequences, in this application, code division multiplexing can be implemented between the first uplink signal and the another uplink signal sent with intra-slot frequency hopping. In this way, resource utilization can be improved, thereby reducing occupation of PUSCH transmission resources of a second-type terminal device, and reducing impact on a peak rate of a PUSCH.

In a possible design, the method further includes: receiving indication information, where the indication information indicates to generate the first generation signal based on the first orthogonal sequence and the second orthogonal sequence.

In a possible design, the method further includes: determining, based on a type of the terminal device, to generate the first generation signal based on the first orthogonal sequence and the second orthogonal sequence.

In a possible design, the method further includes: determining, based on a number K of symbols to which the first uplink signal is mapped, to generate the first generation signal based on the first orthogonal sequence and the second orthogonal sequence.

In a possible design, the method further includes: determining, based on a number of bits of a HARQ-ACK carried in the first uplink signal, to generate the first generation signal based on the first orthogonal sequence and the second orthogonal sequence.

In a possible design, the method further includes: no dedicated resource configuration parameter of the first uplink signal is received before the first uplink signal is sent.

In the foregoing several manners, a network device and the terminal device can align a manner of generating the first uplink signal, thereby helping improve transmission performance.

According to a fourth aspect, a communication method is provided. The method may be performed by a network device or a chip, a chip system, or a circuit used in the network device. The method may be implemented by using the following steps: receiving a first uplink signal without frequency hopping in a first time unit, where the first uplink signal corresponds to a first orthogonal sequence and a second orthogonal sequence, the first uplink signal occupies K symbols in the first time unit, the K symbols include N symbols and M symbols, the N symbols correspond to the first orthogonal sequence, the M symbols correspond to the second orthogonal sequence, K=M+N, and N and M are integers greater than 0.

In this application, the first uplink signal sent without intra-slot frequency hopping corresponds to at least two orthogonal sequences. Because another uplink signal sent via intra-slot frequency hopping is generated based on at least two orthogonal sequences, in this application, code division multiplexing can be implemented between the first uplink signal and the another uplink signal sent with intra-slot frequency hopping. In this way, resource utilization can be improved, thereby reducing occupation of PUSCH transmission resources of a second-type terminal device, and reducing impact on a peak rate of a PUSCH.

In a possible design, the method further includes: receiving a second uplink signal with frequency hopping in the first time unit, where the second uplink signal corresponds to a third orthogonal sequence and a fourth orthogonal sequence, the second uplink signal occupies the K symbols, the N symbols correspond to the third orthogonal sequence, and the M symbols correspond to the fourth orthogonal sequence. In this manner, code division multiplexing can be implemented between the first uplink signal and the second uplink signal.

In a possible design, the method further includes: sending indication information, where the indication information indicates to generate the first generation signal based on the first orthogonal sequence and the second orthogonal sequence. In this manner, the network device and a terminal device can align a manner of generating the first uplink signal, thereby improving transmission performance.

In a possible design, the method further includes: no dedicated resource configuration parameter of the first uplink signal is sent before the first uplink signal is received.

Based on the third aspect and the fourth aspect, the following designs are provided.

In a possible design, $N = \left⌊\frac{K}{2}\right⌋$ and/or $M = K - \left⌊\frac{K}{2}\right⌋$, and └ ┘ represents rounding down. In the foregoing manner, the first orthogonal sequence may be aligned, in time domain, with a first hop of another uplink signal sent via intra-slot frequency hopping, and the second orthogonal sequence may be aligned, in time domain, with a second hop of the another uplink signal sent with intra-slot frequency hopping, thereby helping implement code division multiplexing between the first uplink signal and the another uplink signal sent with intra-slot frequency hopping.

In a possible design, a value of *m'* corresponding to the first orthogonal sequence is different from a value of *m'* corresponding to the second orthogonal sequence. Because values of *m'* of the first hop and the second hop of the another uplink signal sent with intra-slot frequency hopping are different, this manner helps implement code division multiplexing between the first uplink signal and the another uplink signal sent with intra-slot frequency hopping.

In a possible design, the value of *m'* corresponding to the first orthogonal sequence is 0, and the value of *m'* corresponding to the second orthogonal sequence is 1. Because the value of *m'* of the first hop of the another uplink signal sent with intra-slot frequency hopping is 0, and the value of *m'* of the second hop of the another uplink signal sent with intra-slot frequency hopping is 1, this manner helps implement code division multiplexing between the first uplink signal and the another uplink signal sent with intra-slot frequency hopping.

In a possible design, the first orthogonal sequence ${w}_{i}^{1} \left(m\right)$ or the second orthogonal sequence ${w}_{i}^{2} \left(m\right)$ satisfies the following formula: ${w}_{i}^{1} \left(m\right) or {w}_{i}^{2} \left(m\right) = {e}^{j 2 πϕ \left(m\right) / {N}_{SF , m ′}^{PUCCH , 1}} .$

*i* is an orthogonal sequence index of the first orthogonal sequence or the second orthogonal sequence.

*ϕ*(*m*) is determined based on ${N}_{SF , m ′}^{PUCCH , 1}$ and *i*.${N}_{SF , m ′}^{PUCCH , 1}$ is related to *m'*.

In the foregoing manner, a length of the first orthogonal sequence may be the same as a length of an orthogonal sequence of the first hop of the another uplink signal sent with intra-slot frequency hopping, and a length of the second orthogonal sequence may be the same as a length of an orthogonal sequence of the second hop of the another uplink signal sent with intra-slot frequency hopping, thereby implementing code division multiplexing between the first uplink signal and the another uplink signal sent with intra-slot frequency hopping.

In a possible design, the orthogonal sequence index corresponding to the first orthogonal sequence is the same as the orthogonal sequence index corresponding to the second orthogonal sequence.

In a possible design, a base sequence corresponding to the first orthogonal sequence is the same as a base sequence corresponding to the second orthogonal sequence.

In a possible design, the first orthogonal sequence corresponds to a first base sequence, the second orthogonal sequence corresponds to a second base sequence, and a determining manner of the first base sequence is different from a determining manner of the second base sequence.

In a possible design, a value of *nₕₒₚ* corresponding to the first base sequence is different from a value of *nₕₒₚ* corresponding to the second base sequence.

In a possible design, the value of *nₕₒₚ* corresponding to the first base sequence is 0, and the value of *nₕₒₚ* corresponding to the second base sequence is 1.

In a possible design, a sequence group number *u*1 corresponding to the first base sequence or a sequence group number *u*2 corresponding to the second base sequence is determined based on *f_{gh}*. .

c() is a pseudo-random sequence. ${n}_{s , f}^{μ}$ is a slot number in a radio frame.

*mod* is a modulo operation.

In a possible design, the sequence group number *u*1 corresponding to the first base sequence or the sequence group number *u*2 corresponding to the second base sequence satisfies the following formula: $u 1 or u 2 = \left({f}_{gh}+{f}_{ss}\right) mod 30 .$

*fₛₛ* = *n_{ID} mod* 30, and *n_{ID}* is a cell identifier.

In a possible design, a sequence number corresponding to the first base sequence or the second base sequence is *v* = 0.

In a possible design, a type of the terminal device is a first-type terminal device, and a maximum bandwidth capability of the first-type terminal device is less than a maximum bandwidth capability of a second-type terminal device; or a maximum bandwidth capability of the terminal device is less than or equal to a preset value.

In a possible design, the first uplink signal is a PUCCH, or the first uplink signal is uplink control information corresponding to the PUCCH, or the first uplink signal is a DMRS corresponding to the PUCCH.

According to a fifth aspect, this application further provides a communication apparatus. The apparatus is a terminal device or a chip in the terminal device. The communication apparatus has functions of implementing any method provided in the first aspect or the third aspect. The communication apparatus may be implemented by hardware, or may be implemented by executing corresponding software by hardware. The hardware or the software includes one or more units or modules corresponding to the foregoing functions.

In a possible design, the communication apparatus includes a processor. The processor is configured to support the communication apparatus in performing a corresponding function of the terminal device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like a service network device, for example, data or signal receiving and sending. For example, a communication interface may be a transceiver, a circuit, a bus, a module, or another type of communication interface.

In a possible design, the communication apparatus includes corresponding functional modules respectively configured to implement steps in the foregoing methods. The function may be implemented by hardware, or may be implemented by executing corresponding software by hardware. The hardware or software includes one or more modules corresponding to the foregoing functions.

In a possible design, a structure of the communication apparatus includes a processing unit (or a processing module) and a communication unit (or a communication module). These units may perform corresponding functions in the foregoing method examples. For details, refer to the descriptions in the method provided in the first aspect or the third aspect. Details are not described herein again.

According to a sixth aspect, this application further provides a communication apparatus. The apparatus is a network device or a chip in the network device. The communication apparatus has functions of implementing any method provided in the second aspect or the fourth aspect. The communication apparatus may be implemented by hardware, or may be implemented by executing corresponding software by hardware. The hardware or the software includes one or more units or modules corresponding to the foregoing functions.

In a possible design, the communication apparatus includes a processor. The processor is configured to support the communication apparatus in performing a corresponding function of the network device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like a terminal device, for example, data or signal receiving and sending. For example, a communication interface may be a transceiver, a circuit, a bus, a module, or another type of communication interface.

In a possible design, the communication apparatus includes corresponding functional modules respectively configured to implement steps in the foregoing methods. The function may be implemented by hardware, or may be implemented by executing corresponding software by hardware. The hardware or software includes one or more modules corresponding to the foregoing functions.

In a possible design, a structure of the communication apparatus includes a processing unit (or a processing module) and a communication unit (or a communication module). These units may perform corresponding functions in the foregoing method examples. For details, refer to the descriptions in the method provided in the second aspect or the fourth aspect. Details are not described herein again.

According to a seventh aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the first aspect or the third aspect and the possible designs by using a logic circuit or executing code instructions.

According to an eighth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the second aspect or the fourth aspect and the possible designs by using a logic circuit or executing code instructions.

According to a ninth aspect, a computer-readable storage medium is provided. The computer-readable storage medium stores a computer program or instructions. When the computer program or the instructions are executed by a processor, the method in any one of the first aspect to the fourth aspect and the possible designs is implemented.

According to a tenth aspect, a computer program product storing instructions is provided. When the instructions are run by a processor, the method in any one of the first aspect to the fourth aspect and the possible designs is implemented.

According to an eleventh aspect, a chip system is provided. The chip system includes a processor, and may further include a memory, configured to implement the method in any one of the first aspect to the fourth aspect and the possible designs. The chip system may include a chip, or may include a chip and another discrete component.

According to a twelfth aspect, a communication system is provided. The system includes the apparatus (for example, a first terminal device) in the first aspect and the apparatus (for example, a network device) in the second aspect. The communication system may further include another terminal apparatus (for example, a second terminal device) in the second aspect.

According to a thirteenth aspect, a communication system is provided. The system includes the apparatus (for example, a first terminal device) in the third aspect and the apparatus (for example, a network device) in the fourth aspect. The communication system may further include another terminal apparatus (for example, a second terminal device) in the fourth aspect.

For technical effects that can be achieved by the technical solutions in any one of the fifth aspect to the thirteenth aspect, refer to descriptions of technical effects that can be achieved by the technical solutions in the first aspect. Details are not described herein again.

### BRIEF DESCRIPTION OF DRAWINGS

FIG. 1 is a diagram of PUCCH sending according to an embodiment of this application;
FIG. 2 is another diagram of PUCCH sending according to an embodiment of this application;
FIG. 3 is another diagram of PUCCH sending according to an embodiment of this application;
FIG. 4 is a diagram of frequency hopping according to an embodiment of this application;
FIG. 5 is a diagram of frequency hopping according to an embodiment of this application;
FIG. 6 is a diagram of frequency hopping according to an embodiment of this application;
FIG. 7 is a diagram of an architecture of a communication system according to an embodiment of this application;
FIG. 8 is a diagram of a connection between a network device and a terminal device according to an embodiment of this application;
FIG. 9 is a schematic flowchart of a communication method according to an embodiment of this application;
FIG. 10 is a diagram of uplink signal sending according to an embodiment of this application;
FIG. 11 is a schematic flowchart of a communication method according to an embodiment of this application;
FIG. 12 is a diagram of uplink signal sending according to an embodiment of this application;
FIG. 13 is a diagram of a structure of a communication apparatus according to an embodiment of this application; and
FIG. 14 is a diagram of a structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following explains and describes some terms in embodiments of this application, to facilitate understanding of a person skilled in the art.
1. A legacy terminal (legacy UE) may be, for example, an enhanced mobile broadband (enhanced mobile broadband, eMBB) terminal or an ultra-reliable low-latency communication (ultra-reliable low-latency communication, URLLC) terminal. The legacy UE may also be referred to as non-reduced capability (reduced capability, REDCAP) UE or the like.
2. REDCAP UE may be a terminal with a reduced capability relative to the legacy UE, for example, may be user equipment (user equipment, UE) of Release 17.

A difference between the legacy UE and the REDCAP UE includes one or more of the following:
(1) Bandwidth capabilities are different. A maximum bandwidth supported by the legacy UE may be greater than a maximum bandwidth supported by the REDCAP UE. For example, the legacy UE can support simultaneously using a maximum of 100 MHz of frequency domain resources on one carrier to communicate with a network device, and the REDCAP UE can support using a maximum of 20 MHz, 10 MHz, or 5 MHz of frequency domain resources on one carrier to communicate with the network device.
(2) Numbers of transceiver antennas are different. An antenna configuration of the legacy UE may be greater than an antenna configuration of the REDCAP UE. For example, a minimum antenna configuration supported by the legacy UE may be greater than a maximum antenna configuration supported by the REDCAP UE. For example, the minimum antenna configuration supported by the legacy UE may be 4T2R, to be specific, in the minimum antenna configuration, four receive antennas are used to receive downlink signals, and two transmit antennas are used to send uplink signals. However, the maximum antenna configuration supported by the REDCAP UE may be lower than 4T2R. For example, the REDCAP UE supports only 2R1T, or may support 2R2T.
(3) Maximum uplink transmit power is different. Maximum uplink transmit power of the legacy UE may be greater than maximum uplink transmit power of the REDCAP UE. For example, the maximum uplink transmit power of the legacy UE may be 23 dBm or 26 dBm, and the maximum uplink transmit power of the REDCAP UE can only be a value ranging from 4 dBm to 20 dBm.
(4) The legacy UE and the REDCAP UE correspond to different protocol releases. For example, an NR Rel-15 terminal or an NR Rel-16 terminal may be considered as the legacy UE, and the REDCAP UE may be considered as an NR Rel-17 terminal.
(5) The legacy UE and the REDCAP UE support different carrier aggregation (carrier aggregation, CA) capabilities. For example, the legacy UE may support carrier aggregation, but the REDCAP UE does not support carrier aggregation. For another example, both the REDCAP UE and the legacy UE support carrier aggregation, but a maximum number of carriers supported by the legacy UE for simultaneous aggregation is greater than a maximum number of carriers supported by the REDCAP UE for simultaneous aggregation. For example, the legacy UE may support simultaneous aggregation of a maximum of five carriers or 32 carriers, while the REDCAP UE supports simultaneous aggregation of a maximum of two carriers.
(6) The legacy UE and the REDCAP UE have different frequency division duplex (frequency division duplex, FDD) capabilities. For example, the legacy UE may support full-duplex FDD, while the REDCAP UE may support only half-duplex FDD.
(7) The REDCAP UE and the legacy UE have different data processing time capabilities. For example, a minimum delay between receiving downlink data by the legacy UE and sending feedback for the downlink data by the legacy UE is less than a minimum delay between receiving downlink data by the REDCAP UE and sending feedback for the downlink data by the REDCAP UE; and/or a minimum delay between sending uplink data by the legacy UE and receiving feedback for the uplink data by the legacy UE is less than a minimum delay between sending uplink data by the REDCAP UE and receiving feedback for the uplink data by the REDCAP UE.
(8) The legacy UE and the REDCAP UE have different processing capabilities.
(9) The legacy UE and the REDCAP UE correspond to different peak rates of uplink and/or downlink transmission.
(10) An enhanced reduced capability (enhanced reduced capability, eREDCAP) terminal (EREDCAP UE) supports a downlink bandwidth part (bandwidth part, BWP) that is configured through UE-specific radio resource control (radio resource control, RRC) (UE-specific RRC) and includes a cell defining SSB (cell defining SSB, CD-SSB) or a non-cell defining SSB (non-cell defining SSB, NCD-SSB). The legacy UE supports only a downlink BWP that is configured through UE-specific RRC and includes a CD-SSB.
(11) The REDCAP UE supports performing NCD-SSB-based measurement in a downlink BWP configured through RRC.

3. The EREDCAP UE may be understood as a terminal with a further reduced capability relative to the REDCAP UE. The EREDCAP UE inherits most configurations of the REDCAP UE, and further enhancement includes at least one of the following:
(1) Uplink and downlink peak rates are 10 Mbps. In addition, for UE in a feature group FG 48-1, a peak rate corresponds to v*Q*f=3.2. v is a number of multiple-input multiple-output (multiple-input multiple-output, MIMO) layers (layer), Q is a modulation order, and f is a scaling factor. For UE in a feature group FG 48-2, when a number of layers is 1, a peak rate corresponds to v*Q*f=0.8; or when the number of layers is 2, the peak rate corresponds to v*Q*f=0.75.
(2) For the UE in the FG 48-1, a maximum number of uplink or downlink unicast scheduling physical resource blocks (physical resource block, PRB) supported by a single slot (slot) or a single hop (hop) is 25 at 15 kHz or 12 at 30 kHz.
(3) When a number of resource blocks (resource block, RB) scheduled for a physical downlink shared channel (physical downlink shared channel, PDSCH) of a random access response (random access response, RAR) or a PDSCH of a message B (MsgB) exceeds 25 at 15 kHz or 12 at 30 kHz, RAR processing timeline relaxation of 1/0.5 ms respectively corresponds to a subcarrier spacing (subcarrier spacing, SCS) of 15/30 kHz.

It should be noted that the terminal device in this application may belong to the foregoing types, and names of the foregoing types of terminal devices are not limited.

4. A sequence ${r}_{u , v}^{\left(α, δ\right)} \left(n\right)$ is used for a PUCCH format (format) 0 and a PUCCH format 1, where *δ* = 0. The sequence ${r}_{u , v}^{\left(α, δ\right)} \left(n\right)$ is determined based on a base sequence *r̅_{u,v}*(*n*) and a cyclic shift *α.* ${r}_{u , v}^{\left(α, δ\right)} \left(n\right) = {e}^{jαn} {\overline{r}}_{u , v} \left(n\right)$ , and 0 ≤ *n < M_{ZC}. M_{ZC}* is a sequence length. The base sequence *r̅_{u,v}*(*n*) may be divided into groups, where *u* is a group number, and *v* is a base sequence number in a group.

The following exemplarily describes the group number *u* and the base sequence number *v.* The group number u and the base sequence number *v* may be determined based on a higher-layer parameter (for example, pucch-GroupHopping) configured by a network device. For example, assuming that *u* = (*f_{gh} + fₛₛ*) *mod* 30, *f_{gh}, fₛₛ*, and *v* may be determined based on the higher-layer parameter configured by the network device.

An example in which the higher-layer parameter configured by the network device is pucch-GroupHopping is used for description. pucch-GroupHopping has three values: neither, enable, and disable.

If pucch-GroupHopping is set to "neither", *f_{gh}, fₛₛ*, and *v* satisfy the following formulas: ${f}_{gh} = 0 ;$ ${f}_{ss} = {n}_{ID} mod 30 ;$ and $v = 0 .$

*n_{ID}* is a cell identifier.

If pucch-GroupHopping is set to "enable", *f_{gh}, fₛₛ*, and *v* satisfy the following formulas: ${f}_{gh} = \left({\sum }_{m = 0}^{7} {2}^{m} c \left(8\left(2{n}_{s , f}^{μ}+{n}_{hop}\right)+m\right)\right) mod 30 ;$ ${f}_{ss} = {n}_{ID} mod 30 ;$ and $v = 0 .$

*c(i)* is a pseudo-random sequence. For a generation manner, refer to the definition in section 5.2.1 in the 3GPP TS 38.211 V18.0.0 protocol. Details are not described herein. ${n}_{s , f}^{μ}$ is a slot number in a radio frame, and *mod* is a modulo operation.

If pucch-GroupHopping is set to "disable", *f_{gh}, fₛₛ*, and *v* satisfy the following formulas: ${f}_{gh} = 0 ;$ ${f}_{ss} = {n}_{ID} mod 30 ;$ and $v = c \left(2{n}_{s , f}^{μ}+{n}_{hop}\right) .$

If intra-slot frequency hopping is not supported (intra-slot frequency hopping is disabled), *nₕₒₚ* = 0. If intra-slot frequency hopping is supported (intra-slot frequency hopping is enabled), a first hop is: *nₕₒₚ* = 0 and a second hop is: *nₕₒₚ* = 1. In other words, *nₕₒₚ* is used for identifying a resource used for each hop in an intra-slot frequency hopping scenario.

The following separately describes sequences of the PUCCH format 0 and the PUCCH format 1.

### 1. PUCCH format 0

A number of bits of information sent by using the PUCCH format 0 may be 1 or 2. The PUCCH format 0 occupies one RB in frequency domain and one or two symbols in time domain. It should be understood that the number of bits of the information sent by using the PUCCH format 0, a number of RBs occupied by the PUCCH format 0, and a number of symbols occupied in time domain are merely examples for description. This is not limited in this application.

A sequence *x*(*n*) of the PUCCH format 0 is generated based on the following formulas: $x \left(l⋅{N}_{sc}^{RB}+n\right) = {r}_{u , v}^{\left(α, δ\right)} \left(n\right) ;$ $n = 0 , 1 , … , {N}_{sc}^{RB} - 1 ;$ and $l = \left\{\begin{matrix}0 & single - symbol PUCCH transmission \\ 0 , 1 & double - symbol PUCCH transmission\end{matrix}\right. .$${N}_{sc}^{RB}$ is a number of subcarriers included in one resource block.

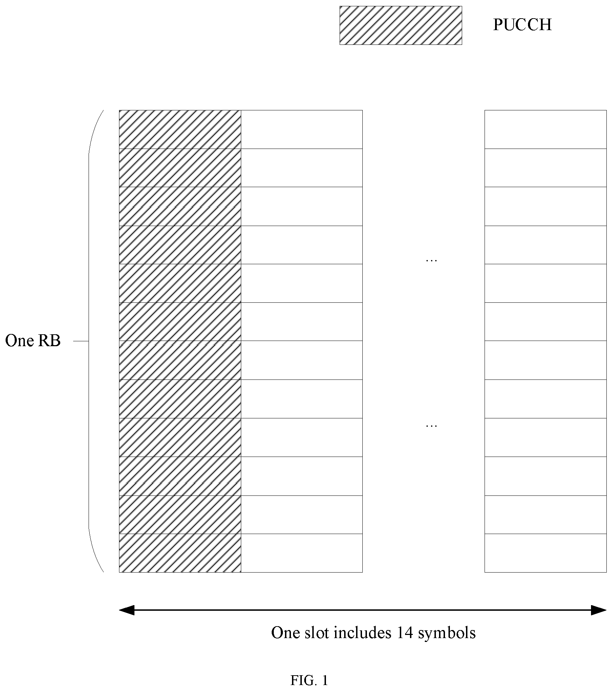

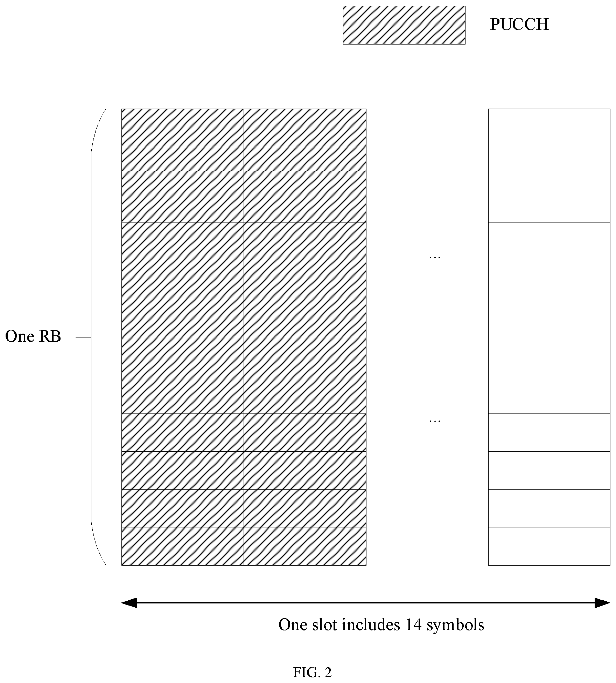

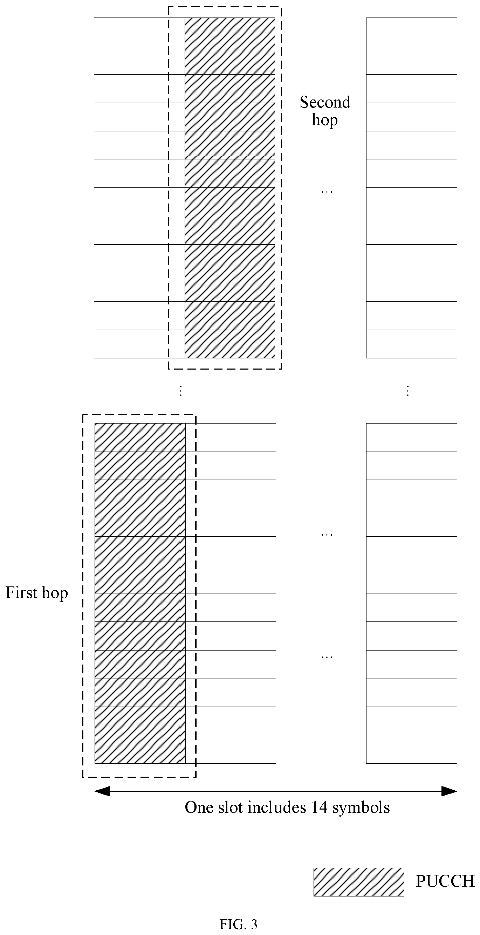

Assuming that the PUCCH format 0 occupies one RB in frequency domain, and occupies one symbol in time domain, resource mapping of the PUCCH format 0 may be shown in FIG. 1. It is assumed that the PUCCH format 0 occupies one RB in frequency domain, and occupies two symbols in time domain. If intra-slot frequency hopping (intra-slot frequency hopping) is not enabled, the two symbols occupied by the PUCCH format 0 correspond to the same RB. In this case, resource mapping of the PUCCH format 0 may be shown in FIG. 2. If intra-slot frequency hopping (intra-slot frequency hopping) is enabled, the two symbols occupied by the PUCCH format 0 correspond to different RBs. In this case, resource mapping of the PUCCH format 0 may be shown in FIG. 3.

### 2. PUCCH format 1

The PUCCH format 1 belongs to a long PUCCH, occupies 4 to 14 OFDM symbols in time domain and one RB in frequency domain, and carries information with a maximum of 2 bits. It should be understood that a number of bits of the information sent by using the PUCCH format 1, a number of RBs occupied by the PUCCH format 0, and a number of symbols occupied in time domain are merely examples for description. This is not limited in this application.

If the number of bits of the information sent by using the PUCCH format 1 is 1, a bit block in the PUCCH format 1 is modulated through binary phase shift keying (binary phase shift keying, BPSK) to obtain a complex number symbol *d*(0). If the number of bits of the information sent by using the PUCCH format 1 is 2, the bit block in the PUCCH format 1 is modulated through quadrature phase shift keying (quadrature phase shift keying, QPSK) to obtain the complex number symbol *d*(0)*.*

The complex number symbol d(0) is multiplied by the sequence ${r}_{u , v}^{\left(α, δ\right)} \left(n\right)$ to obtain a data part *y*(*n*) of the PUCCH format 1, where $y \left(n\right) = d \left(0\right) ⋅ {r}_{u , v}^{\left(α, δ\right)} \left(n\right) ;$ and $n = 0 , 1 , … , {N}_{sc}^{RB} - 1 .$

A complex symbol block $y \left(0\right) , … , y \left({N}_{sc}^{RB}-1\right)$ needs to be spread (spread) based on an orthogonal sequence *wᵢ*(*m*) in a block-wise (block-wise) manner according to the following formulas: $z \left(m′{N}_{sc}^{RB}{N}_{SF , 0}^{PUCCH , 1}+{mN}_{sc}^{RB}+n\right) = {w}_{i} \left(m\right) ⋅ y \left(n\right) ;$ $n = 0 , 1 , … , {N}_{sc}^{RB} - 1 ;$ $m = 0 , 1 , … , {N}_{SF , m ′}^{PUCCH , 1} - 1 ;$ and $m ′ = \left\{\begin{matrix}0 & no intra - slot frequency hopping \\ 0 , 1 & intra - slot frequency hopping\end{matrix}\right. .$${N}_{SF , m ′}^{PUCCH , 1}$ is determined based on Table 1. The orthogonal sequence is: ${w}_{i} \left(m\right) = {e}^{j 2 πϕ \left(m\right) / {N}_{SF , m ′}^{PUCCH , 1}}$*,* and the orthogonal sequence *wᵢ*(*m*) is determined based on Table 2. *i* is an index of the orthogonal sequence.

**Table 1**

| Number ${N}_{symb}^{PUCCH , 1}$ of symbols occupied by a PUCCH | ${N}_{SF , m ′}^{PUCCH , 1}$ | | |
|---|---|---|---|
| | No intra-slot frequency hopping (No intra-slot frequency hopping) *m*' = 0 | Intra-slot frequency hopping (Intra-slot frequency hopping) | |
| | | *m*' = 0 | *m*' = 1 |
| 4 | 2 | 1 | 1 |
| 5 | 2 | 1 | 1 |
| 6 | 3 | 1 | 2 |
| 7 | 3 | 1 | 2 |
| 8 | 4 | 2 | 2 |
| 9 | 4 | 2 | 2 |
| 10 | 5 | 2 | 3 |
| 11 | 5 | 2 | 3 |
| 12 | 6 | 3 | 3 |
| 13 | 6 | 3 | 3 |
| 14 | 7 | 3 | 4 |

**Table 2**

| ${N}_{SF , m ′}^{PUCCH , 1}$ | *Φ* | | | | | | |
|---|---|---|---|---|---|---|---|
| | *i* = 0 | *i* = 1 | *i* = 2 | *i =* 3 | *i* = 4 | *i* = 5 | *i =* 6 |
| 1 | [0] | - | - | - | - | - | - |
| 2 | [0 0] | [0 1] | - | - | - | - | - |
| 3 | [0 0 0] | [0 1 2] | [0 2 1] | - | - | - | - |
| 4 | [0 0 0 0] | [0 2 0 2] | [0 0 2 2] | [0 2 2 0] | - | - | - |
| 5 | [0 0 0 0 0] | [0 1 2 3 4] | [0 2 4 1 3] | [0 3 1 4 2] | [0 4 3 2 1] | - | - |
| 6 | [0 0 0 0 0 0] | [0 1 2 3 4 5] | [024024] | [0 3 0 3 0 3] | [042042] | [054321] | - |
| 7 | [0 0 0 0 0 0 0] | [0 1 2 3 4 5 6] | [0 2 4 6 1 3 5] | [0 3 6 2 5 1 4] | [0 4 1 5 2 6 3] | [0 5 3 1 6 4 2] | [0 6 5 4 3 2 1] |

A reference signal like a demodulation reference signal (demodulation reference signal, DMRS) needs to be inserted into PUCCH format 1 transmission, and a sequence of the DMRS is defined as follows: $z \left(m′{N}_{sc}^{RB}{N}_{SF , 0}^{PUCCH , 1}+{mN}_{sc}^{RB}+n\right) = {w}_{i} \left(m\right) ⋅ {r}_{u , v}^{\left(α, δ\right)} \left(n\right) .$${N}_{SF , m ′}^{PUCCH , 1}$ is determined based on Table 3, and the orthogonal sequence *wᵢ*(*m*) is determined based on Table 4. *i* is the index of the orthogonal sequence. An index of an orthogonal sequence corresponding to the DMRS is the same as an index of an orthogonal sequence corresponding to the PUCCH format 1.

**Table 3**

| ${N}_{symb}^{PUCCH , 1}$ | ${N}_{SF , m ′}^{PUCCH , 1}$ | | |
|---|---|---|---|
| | No intra-slot frequency hopping | Intra-slot frequency hopping | |
| | *m'* = 0 | *m'* = 0 | *m'* = 1 |
| 4 | 2 | 1 | 1 |
| 5 | 3 | 1 | 2 |
| 6 | 3 | 2 | 1 |
| 7 | 4 | 2 | 2 |
| 8 | 4 | 2 | 2 |
| 9 | 5 | 2 | 3 |
| 10 | 5 | 3 | 2 |
| 11 | 6 | 3 | 3 |
| 12 | 6 | 3 | 3 |
| 13 | 7 | 3 | 4 |
| 14 | 7 | 4 | 3 |

For the PUCCH format 1, it is assumed that one PUCCH format 1 occupies nine OFDM symbols, where five symbols are occupied by the DMRS, the orthogonal sequence corresponding to the DMRS is { *wᵢ*(0), *wᵢ*(1), *wᵢ*(2), *wᵢ*(3), *wᵢ*(4) }, four symbols are used for carrying UCI, and an orthogonal sequence corresponding to the UCI is {*wᵢ*(0), *wᵢ*(1), *wᵢ*(2), *wᵢ*(3)}. When intra-slot frequency hopping is not enabled, the nine OFDM symbols occupied by the PUCCH format 1 are located on a same RB. When intra-slot frequency hopping is enabled, a first hop of the PUCCH format 1 is located on an RB, and a second hop of the PUCCH format 1 is located on another RB. A DMRS in the first hop occupies two OFDM symbols, and a corresponding orthogonal sequence is {*wᵢ*(0), *wᵢ*(1)}. The UCI occupies two OFDM symbols, and a corresponding orthogonal sequence is {*wᵢ*(0), *wᵢ*(1)}. A DMRS in the second hop occupies three OFDM symbols, and a corresponding orthogonal sequence is { *wᵢ*(0), *wᵢ*(1), *wᵢ*(2) }. The UCI occupies two OFDM symbols, and a corresponding orthogonal sequence is {*wᵢ*(0), *wᵢ*(1)}.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

In addition, unless otherwise stated on the contrary, ordinal terms such as "first" and "second" mentioned in embodiments of this application are used to distinguish between a plurality of objects, and are not intended to limit sizes, content, a sequence, a time sequence, priorities, importance degrees, or the like of the plurality of objects. For example, a first initial downlink bandwidth part and a second initial downlink bandwidth part are merely used to distinguish between different bandwidth parts, but do not indicate different sizes, priorities, importance degrees, or the like of the two bandwidth parts.

It should be noted that in this application, the term such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relevant concept in a specific manner.

The terms "include", "have", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

The foregoing describes some terms in embodiments of this application. The following describes technical background in embodiments of this application.

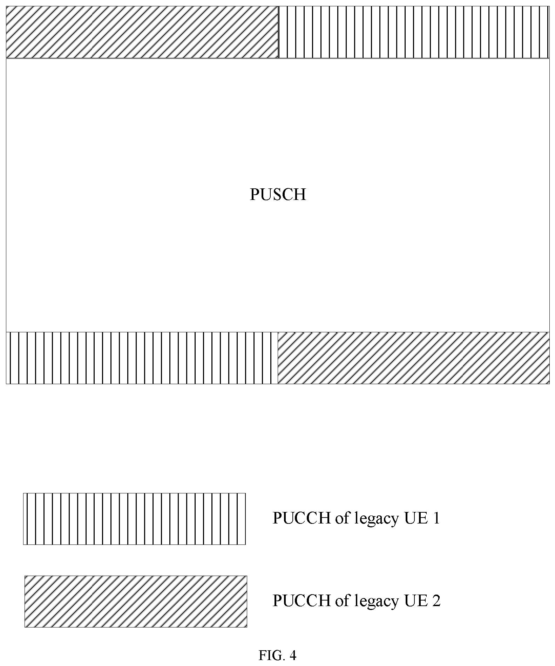

In a conventional technology, for legacy UE, before the legacy UE obtains a dedicated PUCCH resource configuration, the legacy UE transmits a PUCCH through frequency hopping by default, and a format used by the PUCCH is a PUCCH format 0 or a PUCCH format 1. Generation manners of the PUCCH format 0 and the PUCCH format 1 are described in the foregoing term descriptions, and details are not described herein again. For the legacy UE, an example is shown in FIG. 4. In this example, a BWP bandwidth is 100 MHz, and a first hop and a second hop are close to a low frequency end and a high frequency end of a BWP as much as possible. A large number of consecutive resources in a middle blank area in FIG. 4 may be used for PUSCH transmission. An offset (offset) in the figure is an offset between a start RB location of the first hop or the second hop and a boundary of the BWP, and may be notified by a network device to the legacy UE.

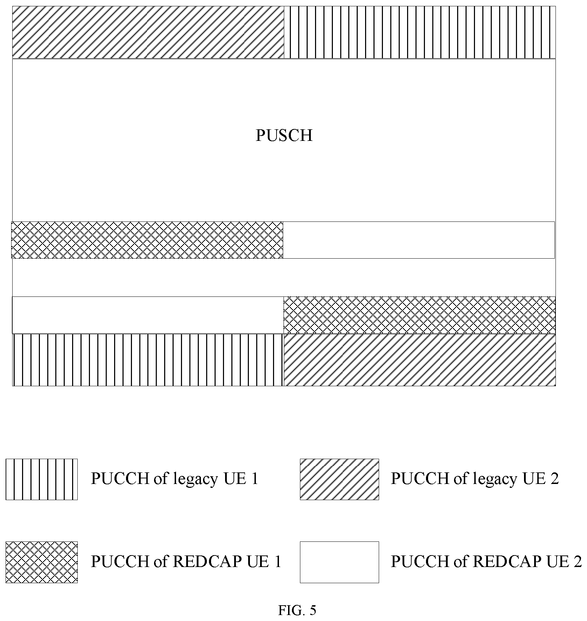

NR R17 supports REDCAP UE. A bandwidth supported by the REDCAP UE is less than that supported by the legacy UE. If frequency hopping is also used for a PUCCH by default before the REDCAP UE obtains a dedicated PUCCH resource configuration, the REDCAP UE performs frequency hopping in a small range. Consequently, consecutive resources that can be originally used by the legacy UE for PUSCH transmission are fragmented into two parts, resulting in a resource fragmentation problem, and affecting a peak rate of the PUSCH transmission of the legacy UE, as shown in FIG. 5. In this example, a BWP bandwidth of the legacy UE is 100 MHz, and a BWP bandwidth of the REDCAP UE is 20 MHz. A middle blank area in the figure is divided into two parts by the PUCCH of the REDCAP UE.

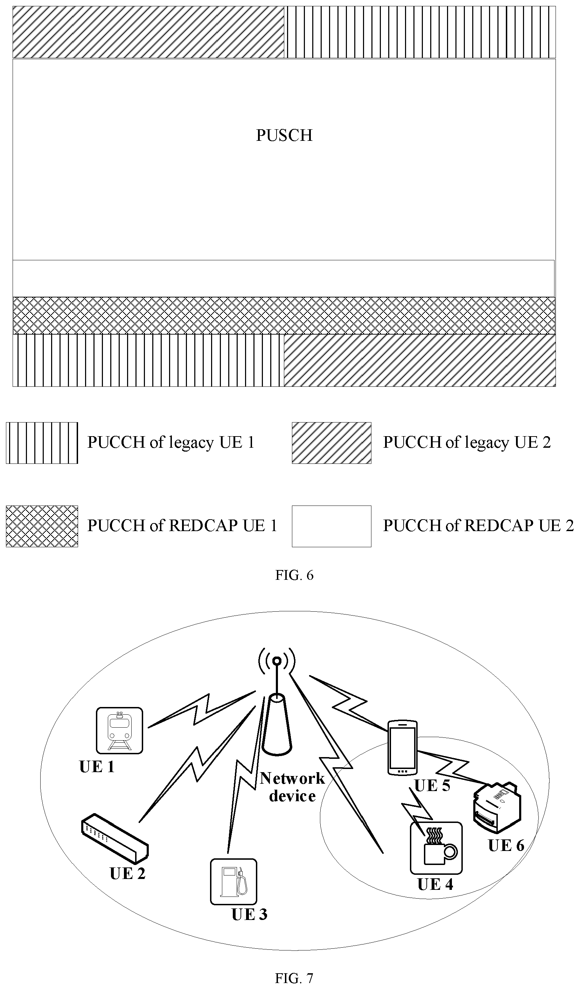

To avoid impact on the PUSCH transmission of the legacy UE, before the REDCAP UE obtains the dedicated PUCCH resource configuration, the PUCCH of the REDCAP UE supports disabling intra-slot frequency hopping, as shown in FIG. 6. In this example, a BWP bandwidth of the legacy UE is 100 MHz, and a BWP bandwidth of the REDCAP UE is 20 MHz. In the figure, the PUCCH of the REDCAP UE is disabling intra-slot frequency hopping. The PUCCH of the REDCAP UE may be adjacent to a first hop or a second hop of a PUCCH of the legacy UE in frequency domain by using an additional offset configuration parameter. In this way, a large number of consecutive resources in a middle blank area in the figure is used for the PUSCH transmission of the legacy UE, and there is no resource fragmentation problem, thereby reducing impact on the PUSCH transmission of the legacy UE.

Based on this, embodiments of this application provide a communication method and apparatus, to resolve a problem that a PUCCH of a narrowband terminal device affects a peak rate of PUSCH transmission of a broadband terminal device. The method and the apparatus are based on a same concept. Because the method and the apparatus have similar problem-resolving principles, for implementations of the apparatus and the method, refer to each other. Repeated parts are not described.

The communication method provided in this application may be applied to various communication systems, for example, an internet of things (internet of things, IoT) system, a narrowband internet of things (narrowband internet of things, NB-IoT) system, a long term evolution (long term evolution, LTE) system, a 5th generation (5G) communication system, an LTE and 5G hybrid architecture, a 5G new radio (new radio, NR) system, and a 6G system or a new communication system emerging in future communication development. The 5G communication system in this application may include at least one of a non-standalone (non-standalone, NSA) 5G communication system and a standalone (standalone, SA) 5G communication system. The communication system may alternatively be a machine to machine (machine to machine, M2M) network or another network.

Communication between a network device and a terminal may be performed by using a licensed spectrum (licensed spectrum), or may be performed by using an unlicensed spectrum (unlicensed spectrum), or may be performed by using both a licensed spectrum and an unlicensed spectrum. Communication between the network device and the terminal may be performed by using a spectrum below 6G, or may be performed by using a spectrum above 6G, or may be performed by using both a spectrum below 6G and a spectrum above 6G. Spectrum resources used between the network device and the terminal are not limited in embodiments of this application.

FIG. 7 shows a communication system according to an embodiment of this application. The communication system includes a network device and a plurality of terminals. For ease of description, in FIG. 7, an example in which the communication system includes one network device and six terminals is used. The six terminals are referred to as UE 1 to UE 6 for short. In the communication system, the UE 1 to the UE 6 may send uplink data to the network device, and the network device may receive the uplink data sent by the UE 1 to the UE 6. In addition, the UE 4 to the UE 6 may also form a communication subsystem. The network device may send downlink information to the UE 1, the UE 2, the UE 3, and the UE 5, and the UE 5 may send the downlink information to the UE 4 and the UE 6 by using a device-to-device (device-to-device, D2D) technology. FIG. 7 is merely a diagram, and a type of the communication system, a number and types of devices included in the communication system, and the like are not specifically limited.

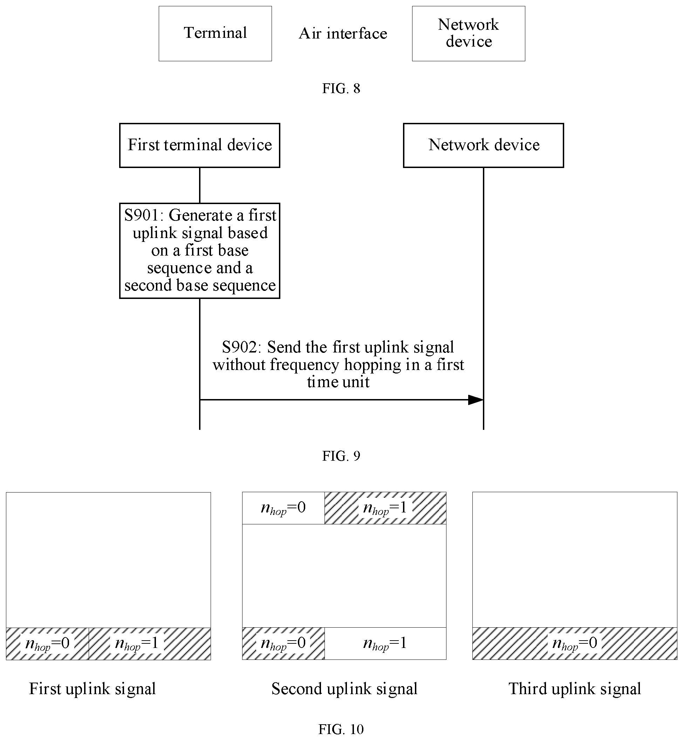

For example, the network device may be connected to the terminal through an air interface. For example, a connection relationship between the network device and the terminal may be shown in FIG. 8.

Embodiments of this application may be applied to a communication system serving a first-type terminal, and certainly may alternatively be applied to a communication system serving a second-type terminal, or a communication system serving both the first-type terminal and the second-type terminal. A maximum bandwidth supported by the first-type terminal device is less than a maximum bandwidth supported by the second-type terminal device. For example, the second-type terminal device may be legacy UE, and the first-type terminal device may be REDCAP UE, EREDCAP UE, or another narrowband terminal device, for example, a terminal device whose bandwidth is less than or equal to a preset value. For example, the preset value may be a frequency value, for example, 20 MHz, 5 MHz, or 3 MHz, or the preset value may be a number of resource units, for example, 25, 15, 12, or 6. The number of resource units is related to a subcarrier spacing, and the resource unit may be a resource block, a subcarrier, or the like.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes the technical solutions in embodiments of this application with reference to the accompanying drawings in embodiments of this application. For ease of description, an example in which the method is performed by the network device and the terminal is used below. The following describes the method in this application.

It should be noted that parameters, formulas, and the like in this application are merely examples for description. For example, *nₕₒₚ* is merely an example. A naming or representation manner of this parameter is not limited in this application. Any parameter that has a same or similar meaning as *nₕₒₚ* can be understood as *nₕₒₚ* in this application.

In this application, "no intra-slot frequency hopping" may also be described as "disable intra-slot frequency hopping", "intra-slot frequency hopping is not enabled", or the like.

FIG. 9 is a schematic flowchart of a communication method according to this application. In the method, an uplink signal sent without intra-slot frequency hopping is divided into two parts in time domain. Frequency domain resources corresponding to the two parts are consecutive, but determining manners of base sequences corresponding to the two parts are different. Further, a determining manner of a base sequence used for an uplink signal transmitted by a narrowband terminal device without frequency hopping may be the same as a determining manner of a base sequence used for an uplink signal transmitted by a broadband terminal device with frequency hopping, so that code division multiplexing can be implemented between a PUCCH sent by the narrowband terminal device and a PUCCH sent by the broadband terminal device, thereby reducing a resource fragmentation problem caused by introduction of the narrowband terminal device, and improving resource utilization of a communication system.

S901: A first terminal device generates a first uplink signal based on a first base sequence and a second base sequence.

It can be learned from the foregoing term introduction 4 that the first uplink signal may use a sequence ${r}_{u , v}^{\left(α, δ\right)} \left(n\right)$, where the sequence ${r}_{u , v}^{\left(α, δ\right)} \left(n\right)$ is determined based on a base sequence *r̅_{u,v}*(*n*) and a cyclic shift *α*. In this application, the first uplink signal is determined based on the first base sequence and the second base sequence. A determining manner of the first base sequence is different from a determining manner of the second base sequence. Specific determining manners are described in detail below.

The first uplink signal occupies K symbols in a first time unit, in other words, a number of symbols occupied by the first uplink signal in the first time unit is K. For example, the first time unit may be a slot. The K symbols include N symbols and M symbols. The N symbols correspond to the first base sequence, the M symbols correspond to the second base sequence, K=M+N, and N and M are integers greater than 0. For example, $N = \left⌊\frac{K}{2}\right⌋$ and/or $M = K - \left⌊\frac{K}{2}\right⌋$, and └ ┘ represents rounding down.

In an example description, that the N symbols correspond to the first base sequence may be understood as that the uplink signal on the N symbols are generated based on the first base sequence. Similarly, that the M symbols correspond to the second base sequence may be understood as that the uplink signal on the M symbols are generated based on the second base sequence.

In an example, the first terminal device may be a first-type terminal device.

The determining manner of the first base sequence is different from the determining manner of the second base sequence. In a possible implementation, resource identifiers of the two base sequences are different, the resource identifier may be a frequency hopping identifier *nₕₒₚ*, and a value of *nₕₒₚ* corresponding to the first base sequence is different from a value of *nₕₒₚ* corresponding to the second base sequence. For example, the value of *nₕₒₚ* corresponding to the first base sequence is 0, and the value of *nₕₒₚ* corresponding to the second base sequence is 1.

In an example, a determining manner of a sequence group number *u*1 corresponding to the first base sequence is different from a determining manner of a sequence group number *u*2 corresponding to the second base sequence. For example, a value of *nₕₒₚ* used for determining the sequence group number *u*1 corresponding to the first base sequence is different from a value of *nₕₒₚ* used for determining the sequence group number *u*2 corresponding to the second base sequence. For example, the value of *nₕₒₚ* used for determining the sequence group number *u*1 corresponding to the first base sequence is 0, and the value of *nₕₒₚ* used for determining the sequence group number *u*2 corresponding to the second base sequence is 1.

In a possible implementation, the determining manner of the first base sequence may be the same as a determining manner of a base sequence corresponding to a first hop of an uplink signal (for example, a second uplink signal in the following) transmitted via intra-slot frequency hopping, and the determining manner of the second base sequence may be the same as a determining manner of a base sequence corresponding to a second hop of the uplink signal (for example, the second uplink signal in the following) transmitted with intra-slot frequency hopping. Sequence group numbers of the two base sequences corresponding to the uplink signal sent with intra-slot frequency hopping are determined based on different values of *nₕₒₚ*. Specifically, the sequence group number of the base sequence corresponding to the first hop is determined based on the value 0 of *nₕₒₚ*, and the sequence group number of the base sequence corresponding to the second hop is determined based on the value 1 of *nₕₒₚ*. In the manner provided in this application, a determining manner of a base sequence of the first uplink signal sent without intra-slot frequency hopping can be the same as the determining manner of the base sequence of the uplink signal sent with intra-slot frequency hopping, so that code division multiplexing can be implemented based on different cyclic shifts *a*.

For ease of understanding of different determining manners of the first base sequence and the second base sequence, the following provides descriptions with reference to generation formulas of base sequences corresponding to a first hop and a second hop when intra-slot frequency hopping is enabled. It should be understood that the following generation formulas are merely examples for description, and generation formulas of the first base sequence and the second base sequence are not limited in this application.

For example, the sequence group number *u*1 corresponding to the first base sequence or the sequence group number *u*2 corresponding to the second base sequence is determined based on *f_{gh}*, where ${f}_{gh} = \left({\sum }_{m = 0}^{7} {2}^{m} c \left(8\left(2{n}_{s , f}^{μ}+{n}_{hop}\right)+m\right)\right) mod 30$ ; c() is a pseudo-random sequence; ${n}_{s , f}^{μ}$ is a slot number in a radio frame; and *mod* is a modulo operation.

In an example, the sequence group number *u*1 corresponding to the first base sequence or the sequence group number *u*2 corresponding to the second base sequence satisfies the following formula: $u 1 or u 2 = \left({f}_{gh}+{f}_{ss}\right) mod 30 .$

*fₛₛ* = *n_{ID} mod* 30, and *n_{ID}* is a cell identifier.

It should be understood that intermediate parameters *f_{gh}* and *fₛₛ* may alternatively not appear in a generation formula of the sequence group number *u*1 corresponding to the first base sequence or the sequence group number *u*2 corresponding to the second base sequence. For example, *u*1 or $u 2 = \left(\left({\sum }_{m = 0}^{7} {2}^{m} c \left(8\left(2{n}_{s , f}^{μ}+{n}_{hop}\right)+m\right)\right)mod 30+{n}_{ID} mod 30\right) mod 30$ . The foregoing formula may be further transformed. The generation formula of the sequence group number *u*1 corresponding to the first base sequence or the sequence group number *u*2 corresponding to the second base sequence is not limited in this application.

For example, a sequence number corresponding to the first base sequence or the second base sequence is *v* = 0.

For a manner of generating the first uplink signal based on the first base sequence and the second base sequence, refer to related descriptions in the foregoing term introduction 4. Details are not described herein again.

For example, the first uplink signal is a PUCCH. In other words, the terminal device may generate the PUCCH in the manner in S901. Alternatively, the first uplink signal is uplink control information corresponding to the PUCCH. In other words, the terminal device may generate, in the manner in S901, the uplink control information corresponding to the PUCCH. Alternatively, the first uplink signal is a DMRS corresponding to the PUCCH. In other words, the terminal device may generate, in the manner in S901, the DMRS corresponding to the PUCCH. Similarly, the second uplink signal in the following is a PUCCH, or the second uplink signal is uplink control information corresponding to the PUCCH, or the second uplink signal is a DMRS corresponding to the PUCCH.

In a possible implementation, the first terminal device receives no dedicated resource configuration parameter of the first uplink signal before sending the first uplink signal. Currently, when receiving no dedicated resource configuration parameter of the first uplink signal, the first terminal device may send the first uplink signal without intra-slot frequency hopping. In this application, when the first uplink signal is sent without intra-slot frequency hopping, the first base sequence and the second base sequence are separately determined in different manners, so that code division multiplexing can be implemented between the first uplink signal and another uplink signal (for example, the second uplink signal in the following) sent with intra-slot frequency hopping. In this way, resource utilization can be improved, thereby reducing occupation of PUSCH transmission resources of a second-type terminal device, and reducing impact on a peak rate of a PUSCH.

S902: The first terminal device sends the first uplink signal without frequency hopping in the first time unit. Correspondingly, a network device receives the first uplink signal without frequency hopping in the first time unit.

Optionally, a second terminal device may generate the second uplink signal based on a third base sequence and a fourth base sequence, and send the second uplink signal without frequency hopping in the first time unit. A determining manner of the third base sequence is different from a determining manner of the fourth base sequence. The second uplink signal occupies the K symbols, the N symbols correspond to the third base sequence, and the M symbols correspond to the fourth base sequence. The second terminal device may be a second-type terminal device.

Optionally, that the determining manner of the third base sequence is different from the determining manner of the fourth base sequence may specifically be that a value of *nₕₒₚ* corresponding to the third base sequence is different from a value of *nₕₒₚ* corresponding to the fourth base sequence, where *nₕₒₚ* may be a frequency hopping identifier. For example, the value of *nₕₒₚ* corresponding to the third base sequence is 0, and the value of *nₕₒₚ* corresponding to the fourth base sequence is 1.

In an example description, the third base sequence may be a base sequence corresponding to a first hop of the second uplink signal, and the fourth base sequence may be a base sequence corresponding to a second hop of the second uplink signal. For the third base sequence and the fourth base sequence, refer to the determining manner of the base sequence of the first hop and the determining manner of the base sequence of the second hop that are used when intra-slot frequency hopping is enabled in the foregoing term introduction 4. Details are not described herein again.

In a possible implementation, the second terminal device receives no dedicated resource configuration parameter of the second uplink signal before sending the second uplink signal.

In this application, when the first uplink signal is sent without intra-slot frequency hopping, the first base sequence and the second base sequence are separately determined in different manners, so that a determining manner of a base sequence of an uplink signal sent without intra-slot frequency hopping is the same as a determining manner of a base sequence of an uplink signal sent with intra-slot frequency hopping. Therefore, code division multiplexing can be implemented, based on different cyclic shifts *α*, between the first uplink signal and another uplink signal (for example, the second uplink signal) sent with intra-slot frequency hopping. In this way, a resource fragmentation problem caused by introduction of the first-type terminal device is reduced, occupation of PUSCH transmission resources of the second-type terminal device by a PUCCH of the first-type terminal device is reduced, and impact on a peak rate of a PUSCH of the second-type terminal device is reduced.

For ease of understanding of an effect implemented in this application, the following provides an example for description.

As shown in FIG. 10, it is assumed that the first uplink signal, the second uplink signal, and a third uplink signal each occupy five symbols, that is, K=5. The first uplink signal and the third uplink signal are sent without intra-slot frequency hopping, the second uplink signal is sent with intra-slot frequency hopping, the first uplink signal corresponds to the first base sequence and the second base sequence, the second uplink signal corresponds to the third base sequence and the fourth base sequence, and the third uplink signal corresponds to a fifth base sequence.

In the diagram, for the first uplink signal, when the first base sequence is determined, *nₕₒₚ* = 0, and when the second base sequence is determined, *nₕₒₚ* = 1. For the second uplink signal, when the base sequence (that is, the third base sequence) corresponding to the first hop is determined, *nₕₒₚ* = 0, and when the base sequence (that is, the fourth base sequence) corresponding to the second hop is determined, *nₕₒₚ* = 1. For the third uplink signal, when the fifth base sequence is determined, *nₕₒₚ* = 0.

The determining manner of the base sequence of the first uplink signal is the same as the determining manner of the base sequence of the second uplink signal. Therefore, code division multiplexing can be implemented between the first uplink signal and the second uplink signal. The determining manner of the base sequence of the second uplink signal is different from a determining manner of the base sequence of the third uplink signal. Therefore, code division multiplexing cannot be implemented between the second uplink signal and the third uplink signal.

The foregoing describes a manner in which the terminal device sends the first uplink signal. Optionally, the first terminal device may determine, based on some conditions, whether to generate the first uplink signal by using the method in FIG. 9, to be specific, determine whether to generate the first uplink signal based on the first base sequence and the second base sequence. The following describes five manners in which the first terminal device determines whether to generate the first uplink signal based on the first base sequence and the second base sequence.

Manner 1: The network device may send indication information to the first terminal device, where the indication information indicates to generate the first uplink signal based on the first base sequence and the second base sequence. Alternatively, a function of the indication information may be described as follows: The indication information indicates the first terminal device to generate the first uplink signal based on the first base sequence and the second base sequence when sending the first uplink signal without intra-slot frequency hopping. In this manner, a manner in which the first terminal device generates the first uplink signal may be explicitly indicated.

In a specific example, when the network device sends the indication information to the first terminal device, and the indication information corresponds to a first value, the first terminal device generates the first uplink signal based on the first base sequence and the second base sequence when sending the first uplink signal without intra-slot frequency hopping. When the indication information corresponds to a second value, the first terminal device generates the first uplink signal based on one base sequence when sending the first uplink signal without intra-slot frequency hopping. The second value is different from the first value.

Manner 2: The first terminal device generates the first uplink signal based on the first base sequence and the second base sequence by default when sending the first uplink signal without intra-slot frequency hopping.

Manner 3: The first terminal device may determine, based on a type of the first terminal device, to generate the first uplink signal based on the first base sequence and the second base sequence. For example, if the first terminal device is the first-type terminal device, the first terminal device may generate the first uplink signal based on the first base sequence and the second base sequence. If the first terminal device is the second-type terminal device, the first terminal device may generate the first uplink signal based on one base sequence.

Manner 4: The terminal device may determine, based on a number K of symbols to which the first uplink signal is mapped, to generate the first uplink signal based on the first base sequence and the second base sequence. For example, if the number K of symbols to which the first uplink signal is mapped is greater than or equal to a threshold, the first uplink signal is generated based on the first base sequence and the second base sequence. It should be understood that the foregoing manner may also be reversely described. For example, if the number K of symbols to which the first uplink signal is mapped is less than the threshold, the first uplink signal is generated based on one base sequence.

Optionally, for different uplink signal types, values of the threshold may be different. For example, if the first uplink signal is in a PUCCH format 0, the threshold may be 2; or if the first uplink signal is in a PUCCH format 1, the threshold may be 8.

Manner 5: The terminal device may determine, based on a number of bits of a hybrid automatic repeat request acknowledgement (hybrid automatic repeat request acknowledgement, HARQ-ACK) carried in the first uplink signal, to generate the first uplink signal based on the first base sequence and the second base sequence. For example, if the number of bits of the HARQ-ACK carried in the first uplink signal is less than or equal to a threshold, the first uplink signal is generated based on the first base sequence and the second base sequence. It should be understood that the foregoing manner may also be reversely described. For example, if the number of bits of the HARQ-ACK carried in the first uplink signal is greater than the threshold, the first uplink signal is generated based on one base sequence.

In this application, when the first uplink signal is sent without intra-slot frequency hopping, the first base sequence and the second base sequence are separately determined in different manners, so that a determining manner of a base sequence of an uplink signal sent without intra-slot frequency hopping is the same as a determining manner of a base sequence of an uplink signal sent with intra-slot frequency hopping. Therefore, code division multiplexing can be implemented, based on different cyclic shifts *α*, between the first uplink signal and another uplink signal (for example, the second uplink signal) sent with intra-slot frequency hopping. In a code division multiplexing manner, resource utilization can be improved, thereby reducing occupation of PUSCH transmission resources of the second-type terminal device, and reducing impact on a peak rate of a PUSCH.

The foregoing describes a method for implementing code division multiplexing. In the method, the determining manner of the base sequence of the uplink signal sent without intra-slot frequency hopping is the same as the determining manner of the base sequence of the uplink signal sent with intra-slot frequency hopping, to implement code division multiplexing between the uplink signal sent without intra-slot frequency hopping and the uplink signal sent with intra-slot frequency hopping. The following describes another method for implementing code division multiplexing. In the method, the uplink signal sent without intra-slot frequency hopping corresponds to at least two orthogonal sequences. Because the uplink signal sent with intra-slot frequency hopping corresponds to at least two orthogonal sequences, code division multiplexing can be implemented, in this manner, between the uplink signal sent without intra-slot frequency hopping and the uplink signal sent with intra-slot frequency hopping.

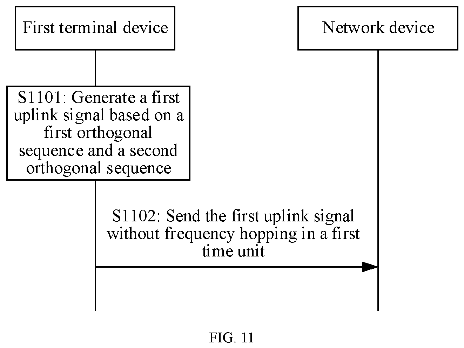

FIG. 11 is a schematic flowchart of a communication method according to this application. The method includes the following steps.

S1101: A first terminal device generates a first uplink signal based on a first orthogonal sequence and a second orthogonal sequence.

It can be learned from the foregoing term introduction 4 that the first uplink signal may use a sequence ${r}_{u , v}^{\left(α, δ\right)} \left(n\right)$, where the sequence ${r}_{u , v}^{\left(α, δ\right)} \left(n\right)$ may be spread based on an orthogonal sequence *wᵢ*(*m*) in a block-wise (block-wise) manner. In this application, when the sequence of the first uplink signal is spread in the block-wise (block-wise) manner, block-wise spreading may be performed based on the first orthogonal sequence and the second orthogonal sequence. The first orthogonal sequence and the second orthogonal sequence are described in detail below.

The first uplink signal occupies K symbols in a first time unit, in other words, a number of symbols occupied by the first uplink signal in the first time unit is K. For example, the first time unit may be a slot. The K symbols include N symbols and M symbols, the N symbols correspond to the first orthogonal sequence, the M symbols correspond to the second orthogonal sequence, K=M+N, and N and M are integers greater than 0. For example, $N = \left⌊\frac{K}{2}\right⌋$ and/or $M = K - \left⌊\frac{K}{2}\right⌋$, and └ ┘ represents rounding down.

In an example description, that the N symbols correspond to the first orthogonal sequence may be understood as that block-wise spreading is performed on the uplink signal on the N symbols based on the first orthogonal sequence. Similarly, that the M symbols correspond to the second orthogonal sequence may be understood as that block-wise spreading is performed on the uplink signal on the M symbols based on the second orthogonal sequence.

In an example, the first terminal device may be a first-type terminal device. A second terminal device below may be a second-type terminal device.

In an example description, a determining manner of the first orthogonal sequence may be the same as a determining manner of an orthogonal sequence corresponding to a first hop of an uplink signal (for example, a second uplink signal in the following) transmitted via intra-slot frequency hopping, and a determining manner of the second orthogonal sequence may be the same as a determining manner of an orthogonal sequence corresponding to a second hop of the uplink signal (for example, the second uplink signal in the following) transmitted with intra-slot frequency hopping.

The two orthogonal sequences corresponding to the uplink signal sent with intra-slot frequency hopping are determined based on different values of *m'*. Specifically, the orthogonal sequence corresponding to the first hop is determined based on a value 0 of *m'*, and the orthogonal sequence corresponding to the second hop is determined based on a value 1 of *m'*. In the manner provided in this application, a determining manner of an orthogonal sequence of the first uplink signal sent without intra-slot frequency hopping can be the same as the determining manner of the orthogonal sequence of the uplink signal sent with intra-slot frequency hopping, so that code division multiplexing can be implemented between the first uplink signal sent without intra-slot frequency hopping and the uplink signal sent with intra-slot frequency hopping.

In a possible implementation, a value of *m'* corresponding to the first orthogonal sequence is different from a value of *m'* corresponding to the second orthogonal sequence. For example, the value of *m'* corresponding to the first orthogonal sequence is 0, and the value of *m'* corresponding to the second orthogonal sequence is 1.

For example, the first orthogonal sequence ${w}_{i}^{1} \left(m\right)$ or the second orthogonal sequence ${w}_{i}^{2} \left(m\right)$ satisfies the following formula: ${w}_{i}^{1} \left(m\right) or {w}_{i}^{2} \left(m\right) = {e}^{j 2 πϕ \left(m\right) / {N}_{SF , m ′}^{PUCCH , 1}} .$

*i* is an orthogonal sequence index of the first orthogonal sequence or the second orthogonal sequence.

*ϕ*(*m*) is determined based on ${N}_{SF , m ′}^{PUCCH , 1}$ and *i*. In an example, for a relationship between ${N}_{SF , m ′}^{PUCCH , 1}$ and *m'*, refer to the foregoing Table 2.${N}_{SF , m ′}^{PUCCH , 1}$ is related to *m'*. In an example, for the relationship between ${N}_{SF , m ′}^{PUCCH , 1}$ and *m'*, refer to the foregoing Table 1 or Table 3. For example, if the first uplink signal is a PUCCH, for the relationship between ${N}_{SF , m ′}^{PUCCH , 1}$ and *m'*, refer to the foregoing Table 1. If the first uplink signal is a DMRS corresponding to the PUCCH, for the relationship between ${N}_{SF , m ′}^{PUCCH , 1}$ and *m'*, refer to the foregoing Table 3.

In a possible manner, the orthogonal sequence index corresponding to the first orthogonal sequence is the same as the orthogonal sequence index corresponding to the second orthogonal sequence.

For a manner of generating the first uplink signal based on the first orthogonal sequence and the second orthogonal sequence, refer to related descriptions in the foregoing term introduction 4. Details are not described herein again.

For example, the first uplink signal is a PUCCH. In other words, the terminal device may generate the PUCCH in the manner in S1101. Alternatively, the first uplink signal is uplink control information corresponding to the PUCCH. In other words, the terminal device may generate, in the manner in S1101, the uplink control information corresponding to the PUCCH. Alternatively, the first uplink signal is a DMRS corresponding to the PUCCH. In other words, the terminal device may generate, in the manner in S1101, the DMRS corresponding to the PUCCH. Similarly, the second uplink signal in the following is a PUCCH, or the second uplink signal is uplink control information corresponding to the PUCCH, or the second uplink signal is a DMRS corresponding to the PUCCH.

In a possible implementation, the first terminal device receives no dedicated resource configuration parameter of the first uplink signal before sending the first uplink signal.

Currently, when the first terminal device receives no dedicated resource configuration parameter of the first uplink signal, the first terminal device may send the first uplink signal without intra-slot frequency hopping. In this application, when the first uplink signal is sent without intra-slot frequency hopping, the first uplink signal is generated based on at least two orthogonal sequences, so that code division multiplexing can be implemented between the first uplink signal and another uplink signal (for example, the second uplink signal in the following) sent with intra-slot frequency hopping. In this way, resource utilization can be improved, thereby reducing occupation of PUSCH transmission resources of the second-type terminal device, and reducing impact on a peak rate of a PUSCH.

S1102: The first terminal device sends the first uplink signal without frequency hopping in the first time unit. Correspondingly, a network device receives the first uplink signal without frequency hopping in the first time unit.

Optionally, the second terminal device may generate the second uplink signal based on a third orthogonal sequence and a fourth orthogonal sequence, and send the second uplink signal without frequency hopping in the first time unit. The second uplink signal occupies the K symbols, the N symbols correspond to the third orthogonal sequence, and the M symbols correspond to the fourth orthogonal sequence.

In a possible implementation, the first terminal device receives no dedicated resource configuration parameter of the second uplink signal before sending the second uplink signal.

In a possible implementation, a value of *m'* corresponding to the third orthogonal sequence is different from a value of *m'* corresponding to the fourth orthogonal sequence. For example, the value of *m'* corresponding to the third orthogonal sequence is 0, and the value of *m'* corresponding to the fourth orthogonal sequence is 1.

In an example description, the third orthogonal sequence may be an orthogonal sequence corresponding to a first hop of the second uplink signal, and the fourth orthogonal sequence may be an orthogonal sequence corresponding to a second hop of the second uplink signal. For the third orthogonal sequence and the fourth orthogonal sequence, refer to the determining manner of the orthogonal sequence of the first hop (for example, a corresponding orthogonal sequence used when *m'* = 0) and the determining manner of the orthogonal sequence of the second hop (for example, a corresponding orthogonal sequence used when *m'* = 1) that are used when intra-slot frequency hopping is enabled in the foregoing term introduction 4. Details are not described herein again.

In a possible manner, an orthogonal sequence index corresponding to the third orthogonal sequence is the same as an orthogonal sequence index corresponding to the fourth orthogonal sequence.

In this application, when the first uplink signal is sent without intra-slot frequency hopping, the first uplink signal is generated based on at least two orthogonal sequences. Because another uplink signal (for example, the second uplink signal in the following) sent with intra-slot frequency hopping is generated based on at least two orthogonal sequences, in this application, code division multiplexing can be implemented between the first uplink signal and the another uplink signal (for example, the second uplink signal in the following) sent with intra-slot frequency hopping. In this way, resource utilization can be improved, thereby reducing occupation of PUSCH transmission resources of the second-type terminal device, and reducing impact on a peak rate of a PUSCH.

For ease of understanding of an effect implemented in this application, the following provides an example for description.

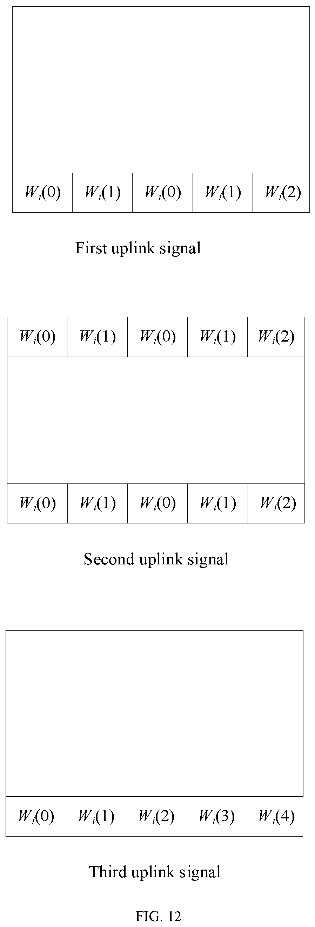

As shown in FIG. 12, it is assumed that the first uplink signal, the second uplink signal, and a third uplink signal each occupy five symbols, that is, K=5. The first uplink signal and the third uplink signal are sent without intra-slot frequency hopping, the second uplink signal is sent with intra-slot frequency hopping, the first uplink signal corresponds to the first orthogonal sequence and the second orthogonal sequence, the second uplink signal corresponds to the third orthogonal sequence and the fourth orthogonal sequence, and the third uplink signal corresponds to a fifth orthogonal sequence.

In the diagram, for the first uplink signal, when the first orthogonal sequence is determined, *m'* = 0, a length of the first orthogonal sequence is 2, and the first orthogonal sequence is {*wᵢ*(0), *wᵢ*(1)}. When the second orthogonal sequence is determined, *m'* = 1, a length of the second orthogonal sequence is 3, and the first orthogonal sequence is {*wᵢ*(0), *wᵢ*(1), *wᵢ*(2)}. For the second uplink signal, when the orthogonal sequence (that is, the third orthogonal sequence) corresponding to the first hop is determined, *m'* = 0, a length of the third orthogonal sequence is 2, and the third orthogonal sequence is {*wᵢ*(0), *wᵢ*(1)}. When the orthogonal sequence (that is, the fourth orthogonal sequence) corresponding to the second hop is determined, *m'* = 1, a length of the fourth orthogonal sequence is 3, and the fourth orthogonal sequence is {*wᵢ*(0), *wᵢ*(1), *wᵢ*(2)}. For the third uplink signal, when the fifth orthogonal sequence is determined, *m'* = 0, a length of the fifth orthogonal sequence is 5, and the fourth orthogonal sequence is {*wᵢ*(0), *wᵢ*(1), *wᵢ*(2), *wᵢ*(3), *wᵢ*(4)}.

The determining manner of the orthogonal sequence of the first uplink signal is the same as the determining manner of the orthogonal sequence of the second uplink signal. Therefore, code division multiplexing can be implemented between the first uplink signal and the second uplink signal. The determining manner of the orthogonal sequence of the second uplink signal is different from a determining manner of the orthogonal sequence of the third uplink signal. Therefore, code division multiplexing cannot be implemented between the second uplink signal and the third uplink signal.

It can be learned from the foregoing term introduction 4 that the uplink signal may use a sequence ${r}_{u , v}^{\left(α, δ\right)} \left(n\right)$, where the sequence ${r}_{u , v}^{\left(α, δ\right)} \left(n\right)$ is determined based on a base sequence *r̅*_{*u*,*v*}(*n*) and a cyclic shift *α*. In this application, the first uplink signal may correspond to the first base sequence and the second base sequence, where the first orthogonal sequence corresponds to the first base sequence, and the second orthogonal sequence corresponds to the second base sequence. The determining manner of the first base sequence may be the same as the determining manner of the second base sequence, that is, a base sequence corresponding to the first orthogonal sequence is the same as a base sequence corresponding to the second orthogonal sequence. Alternatively, the determining manner of the first base sequence may be different from the determining manner of the second base sequence. For details, refer to the determining manners of the first base sequence and the second base sequence in the method in FIG. 9. Details are not described herein again.

The foregoing describes a manner in which the terminal device sends the first uplink signal. Optionally, the terminal device may determine, based on some conditions, whether to generate the first uplink signal by using the method in FIG. 11, to be specific, determine whether to generate the first uplink signal based on the first orthogonal sequence and the second orthogonal sequence. The following describes five manners in which the first terminal device determines whether to generate the first uplink signal based on the first orthogonal sequence and the second orthogonal sequence.

Manner A: The network device may send indication information to the terminal device, where the indication information indicates to generate the first uplink signal based on the first orthogonal sequence and the second orthogonal sequence.

Manner B: The first terminal device generates the first uplink signal based on the first orthogonal sequence and the second orthogonal sequence by default when sending the first uplink signal without intra-slot frequency hopping.

Manner C: The terminal device may determine, based on a type of the terminal device, to generate the first uplink signal based on the first orthogonal sequence and the second orthogonal sequence.

Manner D: The terminal device may determine, based on a number K of symbols to which the first uplink signal is mapped, to generate the first uplink signal based on the first orthogonal sequence and the second orthogonal sequence.

Manner E: The terminal device may determine, based on a number of bits of a HARQ-ACK carried in the first uplink signal, to generate the first uplink signal based on the first orthogonal sequence and the second orthogonal sequence.

For details of the foregoing Manner A to Manner E, refer to related descriptions of Manner 1 to Manner 5 in the method in FIG. 9. Details are not described herein again.

In this application, when the first uplink signal is sent without intra-slot frequency hopping, the first uplink signal is generated based on at least two orthogonal sequences. Because another uplink signal (for example, the second uplink signal in the following) sent with intra-slot frequency hopping is generated based on at least two orthogonal sequences, in this application, code division multiplexing can be implemented between the first uplink signal and the another uplink signal (for example, the second uplink signal in the following) sent with intra-slot frequency hopping. In a code division multiplexing manner, resource utilization can be improved, thereby reducing occupation of PUSCH transmission resources of the second-type terminal device, and reducing impact on a peak rate of a PUSCH.

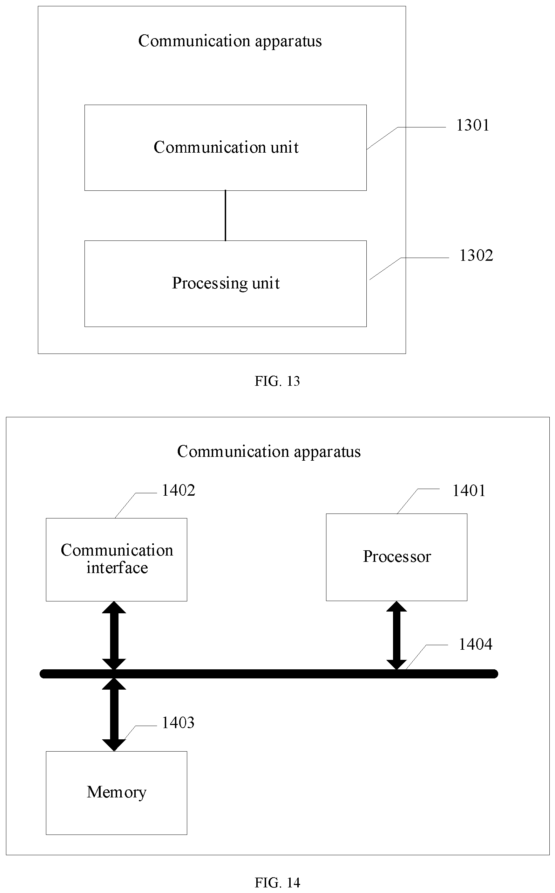

Based on a same inventive concept as the method embodiments, an embodiment of this application provides a communication apparatus. A structure of the communication apparatus may be shown in FIG. 13, and the communication apparatus includes a communication unit 1301 and a processing unit 1302.

In an implementation, the communication apparatus may be specifically configured to implement the method performed by the terminal device in the embodiment in FIG. 9. The apparatus may be the terminal device, or may be a chip or a chip group in the terminal device, or a part of the chip that is configured to perform a related method function. The processing unit 1302 is configured to generate a first uplink signal based on a first base sequence and a second base sequence. A determining manner of the first base sequence is different from a determining manner of the second base sequence. The first uplink signal occupies K symbols in a first time unit, the K symbols include N symbols and M symbols, the N symbols correspond to the first base sequence, the M symbols correspond to the second base sequence, K=M+N, and N and M are integers greater than 0. The communication unit 1301 is configured to send the first uplink signal without frequency hopping in the first time unit.

Optionally, the communication unit 1301 is further configured to receive indication information, where the indication information indicates to generate the first uplink signal according to the first base sequence and the second base sequence.

Optionally, the processing unit 1302 is further configured to: determine, based on a type of the terminal device, to generate the first uplink signal based on the first base sequence and the second base sequence; or determine, based on a number K of symbols to which the first uplink signal is mapped, to generate the first uplink signal based on the first base sequence and the second base sequence; or determine, based on a number of bits of a hybrid automatic repeat request acknowledgement HARQ-ACK carried in the first uplink signal, to generate the first uplink signal based on the first base sequence and the second base sequence.

Optionally, the communication unit 1301 is further configured to receive no dedicated resource configuration parameter of the first uplink signal before sending the first uplink signal.

In an implementation, the communication apparatus may be specifically configured to implement the method performed by the network device in the embodiment in FIG. 9. The apparatus may be the network device, or may be a chip or a chip group in the network device, or a part of the chip that is configured to perform a related method function. The processing unit 1302 is configured to receive, through the communication unit 1301, a first uplink signal without frequency hopping in a first time unit. The first uplink signal corresponds to a first base sequence and a second base sequence, a determining manner of the first base sequence is different from a determining manner of the second base sequence, the first uplink signal occupies K symbols in the first time unit, the K symbols include N symbols and M symbols, the N symbols correspond to the first base sequence, the M symbols correspond to the second base sequence, K=M+N, and N and M are integers greater than 0.

In an implementation, the communication apparatus may be specifically configured to implement the method performed by the terminal device in the embodiment in FIG. 11. The apparatus may be the terminal device, or may be a chip or a chip group in the terminal device, or a part of the chip that is configured to perform a related method function. The processing unit 1302 is configured to generate the first uplink signal based on a first orthogonal sequence and a second orthogonal sequence. The first uplink signal occupies K symbols in the first time unit, the K symbols include N symbols and M symbols, the N symbols correspond to the first orthogonal sequence, the M symbols correspond to the second orthogonal sequence, K=M+N, and N and M are integers greater than 0. The communication unit 1301 is configured to send the first uplink signal without frequency hopping in the first time unit.

Optionally, the communication unit 1301 is further configured to receive indication information, where the indication information indicates to generate the first generation signal based on the first orthogonal sequence and the second orthogonal sequence.

Optionally, the processing unit 1302 is further configured to: determine, based on a type of the terminal device, to generate the first generation signal based on the first orthogonal sequence and the second orthogonal sequence; or determine, based on a number K of symbols to which the first uplink signal is mapped, to generate the first generation signal based on the first orthogonal sequence and the second orthogonal sequence; or determine, based on a number of bits of a HARQ-ACK carried in the first uplink signal, to generate the first generation signal based on the first orthogonal sequence and the second orthogonal sequence.

Optionally, the communication unit 1301 is further configured to receive no dedicated resource configuration parameter of the first uplink signal before sending the first uplink signal.

In an implementation, the communication apparatus may be specifically configured to implement the method performed by the network device in the embodiment in FIG. 9. The apparatus may be the network device, or may be a chip or a chip group in the network device, or a part of the chip that is configured to perform a related method function. The processing unit 1302 is configured to receive, through the communication unit 1301, a first uplink signal without frequency hopping in a first time unit. The first uplink signal corresponds to a first orthogonal sequence and a second orthogonal sequence, the first uplink signal occupies K symbols in the first time unit, the K symbols include N symbols and M symbols, the N symbols correspond to the first orthogonal sequence, the M symbols correspond to the second orthogonal sequence, K=M+N, and N and M are integers greater than 0.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in this embodiment of this application, further refer to related description in the method embodiments.

In a possible manner, the communication apparatus may be shown in FIG. 14. The apparatus may be a communication device or a chip in the communication device. The communication device may be the terminal device in the foregoing embodiments or the network device in the foregoing embodiments. The apparatus includes a processor 1401 and a communication interface 1402, and may further include a memory 1403. The processing unit 1302 may be the processor 1401. The communication unit 1301 may be the communication interface 1402. Optionally, the processor 1401 and the memory 1403 may be integrated together.

The processor 1401 may be a CPU, a digital processing unit, or the like. The communication interface 1402 may be a transceiver, an interface circuit such as a transceiver circuit, a transceiver chip, or the like. The apparatus further includes the memory 1403, configured to store a program executed by the processor 1401. The memory 1403 may be a non-volatile memory such as a hard disk drive (hard disk drive, HDD) or a solid-state drive (solid-state drive, SSD), or may be a volatile memory (volatile memory) such as a random access memory (random access memory, RAM). The memory 1403 is any other medium that can carry or store expected program code in a form of an instruction or data structure and that can be accessed by a computer, but is not limited thereto.

The processor 1401 is configured to execute the program code stored in the memory 1403, and is specifically configured to perform an action of the processing unit 1302. Details are not described in this application again. The communication interface 1402 is specifically configured to perform an action of the communication unit 1301. Details are not described herein again in this application.

In embodiments of this application, a specific connection medium between the communication interface 1402, the processor 1401, and the memory 1403 is not limited. In this embodiment of this application, in FIG. 14, the memory 1403, the processor 1401, and the communication interface 1402 are connected through a bus 1404. The bus is represented by using a bold line in FIG. 14, and a connection manner between other parts is merely used as an example for description, and is not limited thereto. Buses may be classified into an address bus, a data bus, a control bus, and the like. For ease of representation, only one bold line is used to represent the bus in FIG. 14, but this does not mean that there is only one bus or only one type of bus.

An embodiment of the present invention further provides a computer-readable storage medium, configured to store computer software instructions that need to be executed for execution of the foregoing processor, and the computer-readable storage medium includes a program that needs to be executed for execution of the foregoing processor.

An embodiment of this application further provides a communication system, including a communication apparatus configured to implement a function of the terminal device in the embodiment in FIG. 9 and a communication apparatus configured to implement a function of the network device in the embodiment in FIG. 9.

An embodiment of this application further provides a communication system, including a communication apparatus configured to implement a function of the terminal device in the embodiment in FIG. 11 and a communication apparatus configured to implement a function of the network device in the embodiment in FIG. 11.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. In this way, this application is intended to cover these modifications and variations of this application provided that the modifications and variations of this application fall within the scope of claims of this application and equivalent technologies thereof.

## Claims

1. A communication method, wherein the method is applicable to a side of a terminal device, and the method comprises:
generating a first uplink signal based on a first base sequence and a second base sequence, wherein a determining manner of the first base sequence is different from a determining manner of the second base sequence, the first uplink signal occupies K symbols in a first time unit, the K symbols comprise N symbols and M symbols, the N symbols correspond to the first base sequence, the M symbols correspond to the second base sequence, K=M+N, and N and M are integers greater than 0; and
sending the first uplink signal without frequency hopping in the first time unit.

2. The method according to claim 1, wherein $N = \left⌊\frac{K}{2}\right⌋$ and/or $M = K - \left⌊\frac{K}{2}\right⌋$, and └ ┘ represents rounding down.

3. The method according to claim 1 or 2, wherein a value of *nₕₒₚ* corresponding to the first base sequence is different from a value of *nₕₒₚ* corresponding to the second base sequence.

4. The method according to claim 3, wherein the value of *nₕₒₚ* corresponding to the first base sequence is 0, and the value of *nₕₒₚ* corresponding to the second base sequence is 1.

5. The method according to claim 4, wherein a sequence group number *u*1 corresponding to the first base sequence or a sequence group number *u*2 corresponding to the second base sequence is determined based on *f_{gh},* wherein ${f}_{gh} = \left({\sum }_{m = 0}^{7} {2}^{m} c \left(8\left(2{n}_{s , f}^{μ}+{n}_{hop}\right)+m\right)\right) mod 30 ;$
c() is a pseudo-random sequence;
${n}_{s , f}^{μ}$ is a slot number in a radio frame; and
*mod* is a modulo operation.

6. The method according to claim 5, wherein the sequence group number *u*1 corresponding to the first base sequence or the sequence group number *u*2 corresponding to the second base sequence satisfies the following formula: $u 1 or u 2 = \left({f}_{gh}+{f}_{ss}\right) mod 30 ,$ wherein
*fₛₛ* = *n_{ID} mod* 30, and *n_{ID}* is a cell identifier.

7. The method according to any one of claims 1 to 6, wherein a sequence number corresponding to the first base sequence or the second base sequence is *v* = 0.

8. The method according to any one of claims 1 to 7, wherein the method further comprises:
receiving indication information, wherein the indication information indicates to generate the first uplink signal based on the first base sequence and the second base sequence; or
determining, based on a type of the terminal device, to generate the first uplink signal based on the first base sequence and the second base sequence; or
determining, based on a number K of symbols to which the first uplink signal is mapped, to generate the first uplink signal based on the first base sequence and the second base sequence; or
determining, based on a number of bits of a hybrid automatic repeat request acknowledgement HARQ-ACK carried in the first uplink signal, to generate the first uplink signal based on the first base sequence and the second base sequence.

9. The method according to any one of claims 1 to 8, wherein the type of the terminal device is a first-type terminal device, and a maximum bandwidth capability of the first-type terminal device is less than a maximum bandwidth capability of a second-type terminal device; or
a maximum bandwidth capability of the terminal device is less than or equal to a preset value.

10. The method according to any one of claims 1 to 9, wherein the method further comprises:
no dedicated resource configuration parameter of the first uplink signal is received before the first uplink signal is sent.

11. The method according to any one of claims 1 to 10, wherein the first uplink signal is a physical uplink control channel PUCCH, or the first uplink signal is uplink control information corresponding to the PUCCH, or the first uplink signal is a demodulation reference signal DMRS corresponding to the PUCCH.

12. A communication method, wherein the method is applicable to a side of a network device, and the method comprises:
receiving a first uplink signal without frequency hopping in a first time unit, wherein the first uplink signal corresponds to a first base sequence and a second base sequence, a determining manner of the first base sequence is different from a determining manner of the second base sequence, the first uplink signal occupies K symbols in the first time unit, the K symbols comprise N symbols and M symbols, the N symbols correspond to the first base sequence, the M symbols correspond to the second base sequence, K=M+N, and N and M are integers greater than 0.

13. The method according to claim 12, wherein the method further comprises:
receiving a second uplink signal with frequency hopping in the first time unit, wherein the second uplink signal corresponds to a third base sequence and a fourth base sequence, a determining manner of the third base sequence is different from a determining manner of the fourth base sequence, the second uplink signal occupies the K symbols, the N symbols correspond to the third base sequence, and the M symbols correspond to the fourth base sequence.

14. The method according to claim 13, wherein the determining manner of the first base sequence is the same as a determining manner of a base sequence used for a first hop of the second uplink signal, and the determining manner of the second base sequence is the same as a determining manner of a base sequence used for a second hop of the second uplink signal, wherein the second uplink signal is transmitted via intra-slot frequency hopping.

15. The method according to any one of claims 12 to 14, wherein $N = \left⌊\frac{K}{2}\right⌋$ and/or $M = K - \left⌊\frac{K}{2}\right⌋$, and └ ┘ represents rounding down.

16. The method according to any one of claims 12 to 15, wherein a value of *nₕₒₚ* corresponding to the first base sequence is different from a value of *nₕₒₚ* corresponding to the second base sequence.

17. The method according to claim 16, wherein the value of *nₕₒₚ* corresponding to the first base sequence is 0, and the value of *nₕₒₚ* corresponding to the second base sequence is 1.

18. The method according to claim 17, wherein a sequence group number *u*1 corresponding to the first base sequence or a sequence group number *u*2 corresponding to the second base sequence is determined based on *f_{gh}*, wherein ${f}_{gh} = \left({\sum }_{m = 0}^{7} {2}^{m} c \left(8\left(2{n}_{s , f}^{μ}+{n}_{hop}\right)+m\right)\right) mod 30 ;$
c() is a pseudo-random sequence;
${n}_{s , f}^{μ}$ is a slot number in a radio frame; and
*mod* is a modulo operation.

19. The method according to claim 18, wherein the sequence group number *u*1 corresponding to the first base sequence or the sequence group number *u*2 corresponding to the second base sequence satisfies the following formula: $u 1 or u 2 = \left({f}_{gh}+{f}_{ss}\right) mod 30 ,$ wherein
*fₛₛ* = *n_{ID} mod* 30, and *n_{ID}* is a cell identifier.

20. The method according to any one of claims 12 to 19, wherein a sequence number corresponding to the first base sequence or the second base sequence is *v* = 0.

21. The method according to any one of claims 12 to 20, wherein the method further comprises:
sending indication information, wherein the indication information indicates to generate the first uplink signal based on the first base sequence and the second base sequence.

22. The method according to any one of claims 12 to 21, wherein a type of the terminal device is a first-type terminal device, and a maximum bandwidth capability of the first-type terminal device is less than a maximum bandwidth capability of a second-type terminal device; or
a maximum bandwidth capability of the terminal device is less than or equal to a preset value.

23. The method according to any one of claims 12 to 22, wherein the first uplink signal is a physical uplink control channel PUCCH, or the first uplink signal is uplink control information corresponding to the PUCCH, or the first uplink signal is a demodulation reference signal DMRS corresponding to the PUCCH.

24. A communication method, wherein the method is applicable to a side of a terminal device, and the method comprises:
generating a first uplink signal based on a first orthogonal sequence and a second orthogonal sequence, wherein the first uplink signal occupies K symbols in a first time unit, the K symbols comprise N symbols and M symbols, the N symbols correspond to the first orthogonal sequence, the M symbols correspond to the second orthogonal sequence, K=M+N, and N and M are integers greater than 0; and
sending the first uplink signal without frequency hopping in the first time unit.

25. The method according to claim 24, wherein $N = \left⌊\frac{K}{2}\right⌋$ and/or $M = K - \left⌊\frac{K}{2}\right⌋$, and └ ┘ represents rounding down.

26. The method according to claim 24 or 25, wherein a value of *m'* corresponding to the first orthogonal sequence is different from a value of *m'* corresponding to the second orthogonal sequence.

27. The method according to claim 26, wherein the value of *m'* corresponding to the first orthogonal sequence is 0, and the value of *m'* corresponding to the second orthogonal sequence is 1.

28. The method according to claim 27, wherein the first orthogonal sequence ${w}_{i}^{1} \left(m\right)$ or the second orthogonal sequence ${w}_{i}^{2} \left(m\right)$ satisfies the following formula: ${w}_{i}^{1} \left(m\right) or {w}_{i}^{2} \left(m\right) = {e}^{j 2 πϕ \left(m\right) / {N}_{SF , m ′}^{PUCCH , 1}} ,$ wherein
*i* is an orthogonal sequence index of the first orthogonal sequence or the second orthogonal sequence;
*ϕ*(*m*) is determined based on ${N}_{SF , m ′}^{PUCCH , 1}$ and *i*; and
${N}_{SF , m ′}^{PUCCH , 1}$ is related to *m'*.

29. The method according to any one of claims 24 to 28, wherein the orthogonal sequence index corresponding to the first orthogonal sequence is the same as the orthogonal sequence index corresponding to the second orthogonal sequence.

30. The method according to any one of claims 24 to 29, wherein a base sequence corresponding to the first orthogonal sequence is the same as a base sequence corresponding to the second orthogonal sequence; or
the first orthogonal sequence corresponds to a first base sequence, the second orthogonal sequence corresponds to a second base sequence, and a determining manner of the first base sequence is different from a determining manner of the second base sequence.

31. The method according to claim 30, wherein a value of *nₕₒₚ* corresponding to the first base sequence is different from a value of *nₕₒₚ* corresponding to the second base sequence.

32. The method according to claim 31, wherein the value of *nₕₒₚ* corresponding to the first base sequence is 0, and the value of *nₕₒₚ* corresponding to the second base sequence is 1.

33. The method according to claim 32, wherein a sequence group number *u*1 corresponding to the first base sequence or a sequence group number *u*2 corresponding to the second base sequence is determined based on *f_{gh}*, wherein ${f}_{gh} = \left({\sum }_{m = 0}^{7} {2}^{m} c \left(8\left(2{n}_{s , f}^{μ}+{n}_{hop}\right)+m\right)\right) mod 30 ;$
c() is a pseudo-random sequence;
${n}_{s , f}^{μ}$ is a slot number in a radio frame; and
*mod* is a modulo operation.

34. The method according to claim 33, wherein the sequence group number *u*1 corresponding to the first base sequence or the sequence group number *u*2 corresponding to the second base sequence satisfies the following formula: $u 1 or u 2 = \left({f}_{gh}+{f}_{ss}\right) mod 30 ,$ wherein
*fₛₛ* = *n_{ID} mod* 30, and *n_{ID}* is a cell identifier.

35. The method according to any one of claims 24 to 34, wherein a sequence number corresponding to the first base sequence or the second base sequence is *v* = 0.

36. The method according to any one of claims 24 to 35, wherein the method further comprises:
receiving indication information, wherein the indication information indicates to generate the first generation signal based on the first orthogonal sequence and the second orthogonal sequence; or
determining, based on a type of the terminal device, to generate the first generation signal based on the first orthogonal sequence and the second orthogonal sequence; or
determining, based on a number K of symbols to which the first uplink signal is mapped, to generate the first generation signal based on the first orthogonal sequence and the second orthogonal sequence; or
determining, based on a number of bits of a HARQ-ACK carried in the first uplink signal, to generate the first generation signal based on the first orthogonal sequence and the second orthogonal sequence.

37. The method according to any one of claims 24 to 36, wherein the type of the terminal device is a first-type terminal device, and a maximum bandwidth capability of the first-type terminal device is less than a maximum bandwidth capability of a second-type terminal device; or
a maximum bandwidth capability of the terminal device is less than or equal to a preset value.

38. The method according to any one of claims 24 to 37, wherein the method further comprises:
no dedicated resource configuration parameter of the first uplink signal is received before the first uplink signal is sent.

39. The method according to any one of claims 24 to 38, wherein the first uplink signal is a physical uplink control channel PUCCH, or the first uplink signal is uplink control information corresponding to the PUCCH, or the first uplink signal is a demodulation reference signal DMRS corresponding to the PUCCH.

40. A communication method, wherein the method is applicable to a side of a network device, and the method comprises:
receiving a first uplink signal without frequency hopping in a first time unit, wherein the first uplink signal corresponds to a first orthogonal sequence and a second orthogonal sequence, the first uplink signal occupies K symbols in the first time unit, the K symbols comprise N symbols and M symbols, the N symbols correspond to the first orthogonal sequence, the M symbols correspond to the second orthogonal sequence, K=M+N, and N and M are integers greater than 0.

41. The method according to claim 40, wherein the method further comprises:
receiving a second uplink signal with frequency hopping in the first time unit, wherein the second uplink signal corresponds to a third orthogonal sequence and a fourth orthogonal sequence, the second uplink signal occupies the K symbols, the N symbols correspond to the third orthogonal sequence, and the M symbols correspond to the fourth orthogonal sequence.

42. The method according to claim 40 or 41, wherein the method further comprises:
sending indication information, wherein the indication information indicates to generate the first generation signal based on the first orthogonal sequence and the second orthogonal sequence.

43. The method according to any one of claims 40 to 42, wherein $N = \left⌊\frac{K}{2}\right⌋$ and/or $M = K - \left⌊\frac{K}{2}\right⌋$, and └ ┘ represents rounding down.

44. The method according to any one of claims 40 to 43, wherein a value of *m'* corresponding to the first orthogonal sequence is different from a value of *m'* corresponding to the second orthogonal sequence.

45. The method according to claim 44, wherein the value of *m'* corresponding to the first orthogonal sequence is 0, and the value of *m'* corresponding to the second orthogonal sequence is 1.

46. The method according to claim 45, wherein the first orthogonal sequence ${w}_{i}^{1} \left(m\right)$ or the second orthogonal sequence ${w}_{i}^{2} \left(m\right)$ satisfies the following formula: ${w}_{i}^{1} \left(m\right) or {w}_{i}^{2} \left(m\right) = {e}^{j 2 πϕ \left(m\right) / {N}_{SF , m ′}^{PUCCH , 1}} ,$ wherein
*i* is an orthogonal sequence index of the first orthogonal sequence or the second orthogonal sequence;
*ϕ*(*m*) is determined based on ${N}_{SF , m ′}^{PUCCH , 1}$ and *i*; and
${N}_{SF , m ′}^{PUCCH , 1}$ is related to *m'*.

47. The method according to any one of claims 40 to 46, wherein the orthogonal sequence index corresponding to the first orthogonal sequence is the same as the orthogonal sequence index corresponding to the second orthogonal sequence.

48. The method according to any one of claims 40 to 47, wherein a base sequence corresponding to the first orthogonal sequence is the same as a base sequence corresponding to the second orthogonal sequence; or
the first orthogonal sequence corresponds to a first base sequence, the second orthogonal sequence corresponds to a second base sequence, and a determining manner of the first base sequence is different from a determining manner of the second base sequence.

49. The method according to claim 48, wherein a value of *nₕₒₚ* corresponding to the first base sequence is different from a value of *nₕₒₚ* corresponding to the second base sequence.

50. The method according to claim 49, wherein the value of *nₕₒₚ* corresponding to the first base sequence is 0, and the value of *nₕₒₚ* corresponding to the second base sequence is 1.

51. The method according to claim 50, wherein a sequence group number *u*1 corresponding to the first base sequence or a sequence group number *u*2 corresponding to the second base sequence is determined based on *f_{gh}*, wherein ${f}_{gh} = \left({\sum }_{m = 0}^{7} {2}^{m} c \left(8\left(2{n}_{s , f}^{μ}+{n}_{hop}\right)+m\right)\right) mod 30 ;$
c() is a pseudo-random sequence;
${n}_{s , f}^{μ}$ is a slot number in a radio frame; and
*mod* is a modulo operation.

52. The method according to claim 51, wherein the sequence group number *u*1 corresponding to the first base sequence or the sequence group number *u*2 corresponding to the second base sequence satisfies the following formula: $u 1 or u 2 = \left({f}_{gh}+{f}_{ss}\right) mod 30 ,$ wherein
*fₛₛ* = *n_{ID} mod* 30, and *n_{ID}* is a cell identifier.

53. The method according to any one of claims 40 to 52, wherein a sequence number corresponding to the first base sequence or the second base sequence is *v* = 0.

54. The method according to any one of claims 40 to 53, wherein a type of the terminal device is a first-type terminal device, and a maximum bandwidth capability of the first-type terminal device is less than a maximum bandwidth capability of a second-type terminal device; or
a maximum bandwidth capability of the terminal device is less than or equal to a preset value.

55. The method according to any one of claims 40 to 54, wherein the first uplink signal is a physical uplink control channel PUCCH, or the first uplink signal is uplink control information corresponding to the PUCCH, or the first uplink signal is a demodulation reference signal DMRS corresponding to the PUCCH.

56. A communication apparatus, comprising a processor and a memory, wherein the memory is configured to store program instructions, and when the processor executes the program instructions, the method according to any one of claims 1 to 11 is performed, or the method according to any one of claims 24 to 39 is performed.

57. A communication apparatus, comprising a processor and a memory, wherein the memory is configured to store program instructions, and when the processor executes the program instructions, the method according to any one of claims 12 to 23 is performed, or the method according to any one of claims 40 to 55 is performed.

58. A communication apparatus, comprising a unit or module configured to perform the method according to any one of claims 1 to 11, or comprising a unit or module configured to perform the method according to any one of claims 24 to 39.

59. A communication apparatus, comprising a unit or module configured to perform the method according to any one of claims 12 to 23, or comprising a unit or module configured to perform the method according to any one of claims 40 to 55.

60. A computer-readable storage medium, wherein the computer storage medium stores computer-readable instructions, and when the computer-readable instructions are run on a communication apparatus, the method according to any one of claims 1 to 11 is performed, or the method according to any one of claims 12 to 23 is performed, or the method according to any one of claims 24 to 39 is performed, or the method according to any one of claims 40 to 55 is performed.

61. A computer program product, wherein when the computer program product is run on a device, the device is caused to perform the method according to any one of claims 1 to 11, the method according to any one of claims 12 to 23, the method according to any one of claims 24 to 39, or the method according to any one of claims 40 to 55.
